# EUROPÄISCHE PATENTSCHRIFT

(11) **EP 2 907 734 B1**
(45) Veröffentlichungstag und Bekanntmachung des Hinweises auf die Patenterteilung: **05.12.2018**
(21) Anmeldenummer: 15154921.9
(22) Anmeldetag: 12.02.2015
(51) Int. Cl.: B62K 25/28, B62K 21/00, B62K 25/16

(54) **VORDERRADAUFHÄNGUNG EINES FAHRZEUGS**
FRONT SUSPENSION OF A VEHICLE
SUSPENSION AVANT D'UN VÉHICULE

(30) Priorität: 12.02.2014 DE 202014100624 U
(43) Veröffentlichungstag der Anmeldung: 19.08.2015
(73) Patentinhaber: EDAG Engineering GmbH, 65205 Wiesbaden (DE)
(72) Erfinder: Sebastian, Sturm, 82275 Emmering (DE)
(74) Vertreter: Schwabe - Sandmair - Marx

(56) Entgegenhaltungen:
- EP-A1- 2 530 006
- DE-B- 1 009 956
- DE-C2- 2 905 776
- DE-U1- 29 606 900
- DE-U1-202004 017 869
- FR-A1- 2 878 495
- GB-A- 693 646
- GB-A- 2 405 623
- JP-A- 2005 231 609
- US-A- 1 331 747
- US-A- 2 596 411
- US-A- 5 069 303

## Beschreibung

Die Erfindung betrifft ein zwei- oder dreirädriges Fahrzeug bzw. Zwei- oder Dreirad und hier insbesondere eine Vorderradaufhängung des Fahrzeugs. Insbesondere ist die Erfindung auf zweirädrige bzw. einspurige Fahrzeuge und hierunter im Besonderen auf Motorräder gerichtet. Obgleich die Erfindung primär auf Kraftfahrzeuge, nämlich Verbrennungskraftfahrzeuge und Elektrofahrzeuge abzielt, kann das Fahrzeug stattdessen auch ein mit Muskelkraft betriebenes Fahrzeug sein, das den Motor nur zur Unterstützung aufweist.

Bei Motorrädern ist das Vorderrad üblicherweise in einer Gabelanordnung drehbar gelagert. Über die Gabelanordnung werden die Lenkbewegungen auf das Vorderrad übertragen und die Stoßbelastungen abgefangen. Die Gabelanordnungen benötigen erheblichen Raum, insbesondere in der Höhe, und sind wegen der aufzunehmenden Stoßbelastungen bei gleichzeitig zu übertragenden Lenkbewegungen konstruktiv aufwendig, vor allem im Hinblick auf die diversen Lager, und daher kostspielig, gleichwohl störanfällig.

Ein aus der DE 20 2004 017 869 U1 bekannter Lösungsvorschlag begegnet dieser Problematik durch Trennung von Lenkung und Stoßdämpfung. Das Vorderrad ist drehbar in einer vereinfachten Gabel gelagert, die im unteren Bereich mit Führungsschwingen verbunden ist, die mittels Querlenkern und einem Lenkgestänge mit dem Lenker des Motorrads gekoppelt sind. Im oberen Bereich der Gabel ist ein zweiarmiger Hebel über einen vorderen Hebelarm mittels eines Kugelgelenks angelenkt. Der zweiarmige Hebel ist an der Stützstruktur des Motorrads um eine horizontale Querachse schwenkbar gelagert und stützt sich mit seinem vom Vorderrad abgewandten hinteren Hebelarm über eine Stoßdämpfungseinrichtung an der Stützstruktur ab. Der Schwerpunkt der Vorderradaufhängung liegt noch immer hoch. Zudem benötigt die Anordnung aus Gabel, oberem Hebel, den im unteren Bereich angeordneten Führungsschwingen und der Stoßdämpfungseinrichtung erheblichen Bauraum im vorderen Bereich des Fahrzeugs.

Aus der DE 69 101 605 T2 ist ein Motorrad bekannt, dessen Vorderrad an einem in Längsrichtung im Wesentlichen horizontal erstreckten, steifen Arm gelagert ist, der seitlich vom Vorderrad angeordnet und am Motor unbeweglich befestigt ist. Das Vorderrad ist am Arm mittels entsprechender Gelenke um eine Hochachse schwenkbar und um die Vorderradachse drehbar befestigt. Die Lenkbewegungen werden in diese vom steifen Arm gelagerte Gelenkanordnung eingeleitet. In der Gelenkanordnung werden auch die Stoßbelastungen abgefangen. Die Anordnung der Stoßdämpfungseinrichtung in dem beengten Bauraum im Bereich der Vorderradachse dürfte problematisch sein. Auch die Bremse muss dort angeordnet werden. Innerhalb der Stoßdämpfungseinrichtung werden den entlang einer Dämpfungsachse wirkenden Dämpfungskräften bei Kurvenfahrt erhebliche Querkräfte überlagert. Ferner muss das Lenkgestänge in erheblichem Ausmaß Relativbewegungen zwischen dem Lenker und dem Vorderrad ausgleichen. Der steife Arm ist voluminös und schwer.

Die DE 29 05 776 C2 offenbart eine Vorderradaufhängung mit je einem in Längsrichtung des Motorrads im Wesentlichen horizontal neben dem Vorderrad erstreckten unteren Lenker und oberen Lenker, die um jeweils eine horizontale Querachse schwenkbar mit dem Stützstruktur des Motorrads verbunden sind und das Vorderrad lagern. Stoßbelastungen werden von einer auf den unteren Lenker wirkenden Dämpfungseinrichtung aufgenommen. Das Vorderrad ist über die Vorderradachse an einer Aufnahmestruktur drehbar abgestützt. Die Aufnahmestruktur ist mittels je einem Kardangelenk an den Lenkern in einer Draufsicht gesehen schwenkbar gelagert. Die Lenkbewegungen werden über ein Lenkgestänge in die Aufnahmestruktur eingeleitet, so dass diese der Lenkbewegung entsprechend schwenkt und dabei das Vorderrad mitnimmt. Das Lenkgestänge muss Schwenkbewegungen des Vorderrads ausgleichen. Die Lagerung der Aufnahmestruktur durch die beiden Lenker ist problematisch. Der obere Lenker beansprucht Bauraum, der sonst anderweitig genutzt werden könnte. Auch bei dieser Aufhängung konkurrieren Bremssattel und Lenkgestänge um den engen Raum seitlich des Vorderrads.

Die GB 2 405 623 A betrifft eine Vorderradaufhängung für ein Motorrad. Die Vorderradaufhängung umfasst in einer Draufsicht auf das Motorrad relativ zur Stützstruktur verschwenkbaren Querlenker, der mit dem Fahrzeuglenker verbunden ist, um Lenkbewegungen des Fahrzeuglenkers in die Vorderradaufhängung einzuleiten. Weiterhin umfasst die Vorderradaufhängung eine in Längsrichtung des Motorrads erstreckende Führungsschwinge, die mit dem Querlenker gelenkig verbunden und über den Querlenker an der Stützstruktur abgestützt ist und das Vorderrad drehbar lagert. Schließlich umfasst die Vorderradaufhängung eine Stoßdämpfereinrichtung, die mit der Führungsschwinge in einem in Längsrichtung zwischen dem Querlenker und der Vorderradachse gelegenen Bereich der Führungsschwinge gelenkig verbunden ist, um auf das Vorderrad wirkende Stoß- und Bremsbelastungen über die Führungsschwinge zu dämpfen.

Die FR 2 878 495 A1 offenbart ein Zweirad, auf dem der Oberbegriff von Anspruch 1 basiert und das eine Stoßdämpfervorrichtung in Höhe des Vorderrads aufweist. Der Querlenker liegt in Längsrichtung des Zweirads vor der starren Verbindung der Stoßdämpfervorrichtung mit der Führungsschwinge.

Es ist eine Aufgabe der Erfindung, ein zwei- oder dreirädriges Fahrzeug mit Stützstruktur, Motor, Fahrzeuglenker, Hinterrad, Vorderrad und einer Vorderradaufhängung zu schaffen, bei dem die Vorderradaufhängung mit tiefliegendem Schwerpunkt ausgestattet und mechanisch einfach und robust ausgeführt ist.
Die Erfindung geht von einem zwei- oder dreirädrigem Fahrzeug aus, wie etwa einem Motorrad, Motorroller oder Trike, das wie üblich eine Stützstruktur, einen Motor, einen Fahrzeuglenker, ein Hinterrad, ein Vorderrad und Aufhängungen für die Räder aufweist. Die Stützstruktur kann eine Basisstruktur des Fahrzeugs sein, beispielsweise ein Rahmen, an der andere Fahrzeugkomponenten, insbesondere der Motor und über die jeweilige Aufhängung die Räder, abgestützt sind, wobei die Hinterradaufhängung das Hinterrad relativ zur Basisstruktur beweglich lagern oder von der Basisstruktur unmittelbar gebildet werden kann. Alternativ kann der Motor selbsttragend und die Stützstruktur am Motor befestigt oder angeformt oder eine Struktur unmittelbar eines Motorgehäuses sein. Obgleich die Stützstruktur und der Motor relativ zueinander beweglich sein können, wird Ausführungen der Vorzug gegeben, in denen die anspruchsgemäße Stützstruktur und der Motor relativ zueinander unbeweglich sind. Die Stützstruktur kann ein- oder mehrteilig sein. Der Fahrzeuglenker kann wie üblich eine Lenkstange, grundsätzlich aber beispielsweise auch ein Lenkrad sein.
Die Vorderradaufhängung umfasst einen Aufhängungs-Querlenker, im Folgenden Querlenker, der in einer Draufsicht auf das Fahrzeug gesehen relativ zu Stützstruktur und/oder Motor schwenkbar ist. Der Querlenker ist mit dem Fahrzeuglenker gekoppelt, um Lenkbewegungen des Fahrzeuglenkers in die Vorderradaufhängung einleiten zu können. Der Querlenker kann um eine Hochachse des Fahrzeugs oder vorzugsweise um eine in Seitenansicht des Fahrzeugs gesehen unter einem Winkel schräg zur Hochachse weisende Querlenker-Schwenkachse schwenkbar sein. Die Querlenker-Schwenkachse ist in Bezug auf die Stützstruktur des Fahrzeugs vorzugsweise unbeweglich, könnte grundsätzlich aber auch rotatorisch oder translatorisch im geringen Ausmaß beweglich, beispielsweise kippbar oder in Längsrichtung oder Querrichtung des Fahrzeugs versetzbar sein.
Die Vorderradaufhängung umfasst ferner eine in Längsrichtung des Fahrzeugs erstreckte Führungsschwinge, die mit dem Querlenker gelenkig verbunden und über den Querlenker an der Stützstruktur und/oder dem Motor abgestützt ist. Die Führungsschwinge lagert das um seine Vorderradachse drehbare Vorderrad. Das Vorderrad wird von der Führungsschwinge getragen. Dies umfasst Ausführungen, in denen die Führungsschwinge eine Vorderradwelle und damit gemeinsam das ganze Vorderrad um die Vorderradachse drehbar lagert, und insbesondere Ausführungen, in denen die Führungsschwinge ein Achselement unmittelbar drehunbeweglich lagert, mit dem Achselement beispielsweise lösbar unbeweglich gefügt ist, etwa mittels Schraubverbindung, und das Vorderrad auf dem relativ zur Führungsschwinge feststehenden Achselement drehbar gelagert ist. Das Vorderrad ist über die Führungsschwinge und den Querlenker an der Stützstruktur oder dem Motor abgestützt. Auf das Vorderrad während der Fahrt wirkende Bremskräfte werden in Längsrichtung über die Führungsschwinge und den Querlenker abgestützt. Seitenführungskräfte und Torsion, die bei Kurvenfahrt bzw. bei Lenkbewegungen auftreten, werden ebenfalls von der Führungsschwinge und dem Querlenker aufgenommen. Dass die Führungsschwinge in Längsrichtung erstreckt ist, soll bedeuten, dass ihre in Längs- und Fahrtrichtung zwischen einer Gelenkverbindung von Führungsschwinge und Querlenker und der Vorderradachse gemessene Länge im unbelasteten Ruhezustand des Fahrzeugs größer als ihre parallel zur Hochachse des Fahrzeugs zwischen den gleichen Stellen gemessene Höhe ist. In vorteilhaften Ausführungen ist die Länge wenigstens doppelt so groß wie die Höhe. Die Höhe kann im lastfreien Ruhezustand des Fahrzeugs insbesondere "Null" sein.

Die Führungsschwinge kann als einfache Führungsstange geformt sein, beispielsweise als gerade Führungsstange oder, bevorzugter, als eine in der Draufsicht auf das Fahrzeug gesehen gekrümmte Führungsstange. Sie kann sich aus mehreren Führungsstangen, die miteinander vorzugsweise fest gefügt sind, zusammensetzen, um die Steifigkeit der Führungsschwinge zu erhöhen, ihr Gewicht jedoch möglichst gering zu halten. Sie kann vorteilhaft auch als Schalenstruktur geformt sein oder ein oder mehrere Schalenstrukturteile aufweisen. Als Schalenstruktur kann sie geometrisch durch Formgebung und/oder Materialstärkenvariation, besonders gut im Hinblick auf günstigen Kraftfluss und Momentverteilung bei geringem Gewicht gestaltet werden. Vorteilhaft ist eine Hohlprofilstruktur oder eine Schwingenstruktur mit einer oder mehreren Hohlkammern. Die Führungsschwinge kann insbesondere eine Gussstruktur aus Metall oder verstärktem Kunststoff oder eine CFK-Struktur sein, wobei auch in Leichtbauweise eine große Torsions- und Biegsteifigkeit erzielt wird.

Desweiteren umfasst die Vorderradaufhängung eine Stoßdämpfungseinrichtung, die mit der Führungsschwinge gelenkig verbunden ist, um auf das Vorderrad wirkende Stoßbelastungen und Verzögerungskräfte generell über die Führungsschwinge zu dämpfen. Die Stoßdämpfungseinrichtung umfasst vorzugsweise wenigstens eine Feder und wenigstens einen Dämpfer, beispielsweise eine mechanische Feder und einen pneumatischen oder hydraulischen Dämpfer. Ein pneumatischer Dämpfer kann gleichzeitig als Feder wirken, beispielsweise auch die einzige Federungseinrichtung der Stoßdämpfungseinrichtung bilden. Die Stoßdämpfungseinrichtung ist mit der Führungsschwinge so verbunden, dass sie in einem zwischen dem Querlenker und der Vorderradachse gelegenen Längsabschnitt auf die Führungsschwinge wirkt. Dementsprechend ist die Stoßdämpfungseinrichtung entweder direkt oder vorzugsweise über ein oder mehrere Zwischenglieder indirekt in einem in Längsrichtung zwischen dem Querlenker und der Vorderradachse gelegenen Bereich der Führungsschwinge mit der Führungsschwinge gelenkig verbunden. Auf das Vorderrad wirkende Stoßbelastungen werden entsprechend über einen vorderen Längsabschnitt der Führungsschwinge, der das Vorderrad trägt, in die Dämpfungseinrichtung eingeleitet und von dieser aufgenommen bzw. gedämpft. Ein zwischen dem Querlenker und der Gelenkverbindung von Führungsschwinge und Dämpfungseinrichtung gelegener Schwingenbereich und insbesondere der Querlenker werden auf diese Weise von Stoßkräften gänzlich oder doch weitestgehend freigehalten, wodurch die Feinfühligkeit der Lenkung verbessert wird.

In bevorzugten Ausführungen umfasst die Vorderradaufhängung eine in Längsrichtung des Fahrzeugs erstreckte weitere Führungsschwinge, die mit dem Querlenker ebenfalls gelenkig verbunden und über den Querlenker am Stützstruktur oder Motor abgestützt ist. In derartigen Ausführungen ist das Vorderrad zwischen den Führungsschwingen angeordnet und wird von den Führungsschwingen gemeinsam um die Vorderradachse gelagert, also von den Führungsschwingen gemeinsam getragen. Die eine der Führungsschwingen erstreckt sich dementsprechend rechts und die andere links vom Vorderrad, so dass die Führungsschwingen auch als rechte Führungsschwinge und linke Führungsschwinge bezeichnet werden können. Soweit vorstehend und nachfolgend Ausführungen nur in Bezug auf eine Führungsschwinge gemacht werden, gelten die gleichen Ausführungen vorzugsweise auch für die jeweils andere Führungsschwinge. In zweckmäßigen Ausführungen ist die Vorderradaufhängung in Bezug auf die Führungsschwingen symmetrisch, vorzugsweise ist sie bei für Geradeausfahrt ausgerichtetem Vorderrad in Bezug auf eine zentrale Längsachse oder in Längs- und Hochrichtung erstreckte Ebene symmetrisch.

Die eine oder die zwei Führungsschwingen ist oder sind in bevorzugten Ausführungen um eine zumindest im Wesentlichen parallel zur Vorderradachse erstreckte Aufhängungs-Schwenkachse schwenkbar. Entsprechend ist das Vorderrad gemeinsam mit der oder den Führungsschwingen um diese Schwenkachse relativ zu der Stützstruktur schwenkbar, wobei diese Schwenkbewegungen auf die Stoßdämpfungseinrichtung wirken und die Stoßdämpfungseinrichtung eine die Schwenkbewegung dämpfende Gegenkraft, eine Dämpfungskraft, erzeugt. Die Aufhängungs-Schwenkachse ist relativ zu Stützstruktur und/oder Motor vorzugsweise ortsfest bzw. unbeweglich.

Die Vorderradaufhängung erlaubt wegen der Anordnung aus Querlenker, Führungsschwinge und Dämpfungseinrichtung, die in einem zwischen dem Querlenker und der Vorderradachse gelegenen Schwingenbereich der Führungsschwinge gelenkig mit dieser verbunden ist, eine hinsichtlich des Bremsverhaltens besonders günstige Gestaltung. Der Konstrukteur erhält einen großen Spielraum für die Anordnung des Bremsnickzentrums und kann daher einen Bremsnickausgleich, einen sogenannten Anti-dive, im Bereich von 60% bis 100%, vorzugsweise 70% bis 90%, einstellen. Die Einstellung kann sehr einfach durch die Position der Aufhängungs-Schwenkachse in Längs- und/oder Hochrichtung des Fahrzeugs eingestellt bzw. beeinflusst werden. Der Momentanpol der Bremsnickbewegung, das Bremsnickzentrum, liegt auf der Aufhängungs-Schwenkachse.

Die Führungsschwinge(n) ist oder sind in bevorzugten ersten Ausführungen mit dem Querlenker gelenkig so verbunden, dass sie die relativ zu der Stützstruktur und/oder dem Motor auf und ab gehende Schwenkbewegung relativ zum Querlenker ausführen kann oder können. Der Querlenker kann in Bezug auf diese mittels der Dämpfungseinrichtung gedämpfte Schwenkbewegung relativ zu der Stützstruktur und/oder dem Motor unbeweglich sein, was bei mechanischer Kopplung von Fahrzeuglenker und Aufhängung über den Querlenker den Vorteil hat, dass diese Schwenkbewegung der Aufhängung in der Kopplung nicht der Lenkbewegung des Fahrzeuglenkers überlagert wird und die Kopplung daher nicht für einen entsprechenden Ausgleich sorgen muss.

Grundsätzlich kann der Querlenker in alternativen zweiten Ausführungen um eine zur Vorderradachse zumindest im Wesentlichen parallele Querlenkerachse relativ zum Stützstruktur drehbar oder schwenkbar gelagert sein, wobei die Querlenkerachse die Aufhängungs-Schwenkachse bildet. In derartigen Ausführungen dreht sich oder schwenkt der Querlenker um die Querlenkerachse bzw. Aufhängungs-Schwenkachse, wenn das Vorderrad gemeinsam mit der oder den Führungsschwingen schwenkt. Vorderrad, Führungsschwinge(n) und Querlenker bilden in den zweiten Ausführungen eine Schwenkeinheit. Den ersten Ausführungen wird allerdings der Vorzug vor den zweiten gegeben.

Obgleich die Lenkbewegungen des Fahrzeuglenkers vorzugsweise über den Querlenker in die Vorderradaufhängung eingeleitet werden, kann in Modifikationen der Fahrzeuglenker über ein oder mehrere Lenkübertragungsglieder, beispielsweise ein Lenkgestänge, mit der Führungsschwinge oder einer der optional zwei Führungsschwingen oder grundsätzlich auch mit jeder der optional zwei Führungsschwingen gekoppelt sein, um die Lenkbewegungen über die Führungsschwinge(n) in die Vorderradaufhängung einzuleiten. Der Fahrzeuglenker ist in der Kopplung im bevorzugten ersten Fall dem Querlenker näher als der oder den Führungsschwinge(n), während er im zweiten Fall der oder den Führungsschwinge(n) näher ist. Im zweiten Fall wäre die jeweilige Führungsschwinge vorteilhafterweise im dem Querlenker nahen Schwingenbereich mit dem Fahrzeuglenker gekoppelt, um den Bereich um das Vorderrad von Lenkübertragungsgliedern freihalten zu können und innerhalb des Lenkübertragungswegs keine Schwenkbewegungen des Vorderrads oder allenfalls Schwenkbewegungen geringen Ausmaßes ausgleichen zu müssen.

Die Kopplung von Fahrzeuglenker und Vorderradaufhängung, im Folgenden auch Lenkkopplung, umfasst in bevorzugten Ausführungen ein Verbindungsgelenk mit einem Gelenkelement, das von einem Aufhängungsglied der Vorderradaufhängung gebildet wird, das nur Lenkbewegungen der Vorderradaufhängung ausführt. Insbesondere kann ein wie vorstehend erläutert bevorzugt nur um die Querlenker-Schwenkachse beweglicher Querlenker dieses Aufhängungsglied bilden. Der Begriff "Gelenkelement" wird von der Erfindung hier wie auch stets sonst funktional verstanden und besagt nur, dass besagtes Aufhängungsglied in seiner Funktion als Gelenkelement der Lenkkopplung als ein in sich nicht beweglicher, starrer Körper betrachtet werden kann.

In bevorzugten Ausführungen ist der Fahrzeuglenker mit der Vorderradaufhängung nur mechanisch gekoppelt. In einfacher und nicht zuletzt deshalb vorteilhafter Ausführung besteht die Lenkkopplung aus dem Fahrzeuglenker, dem innerhalb der Aufhängung dem Fahrzeuglenker nächsten Aufhängungsglied und einem einzigen in sich starren Kopplungsglied, wie etwa eine vom Fahrzeuglenker bis zur Vorderradaufhängung erstreckte Lenkstange. Das Kopplungsglied ist in solch einer Ausführung unmittelbar jeweils mit dem Fahrzeuglenker und der Vorderradaufhängung, vorzugsweise mit deren Querlenker, verbunden. Vorzugsweise bildet das Kopplungsglied mit dem Fahrzeuglenker und dem nächsten Aufhängungsglied jeweils ein Verbindungsgelenk.

In alternativen Ausführungen umfasst die Lenkkopplung ein Kopplungs- oder Lenkübertragungsglied für eine fluidische, beispielsweise hydraulische, oder elektrische, optische oder optoelektronische oder eine drahtlose, beispielsweise elektromagnetische, Übertragung der Lenkbewegung des Fahrzeuglenkers auf die Vorderradaufhängung. Die Vorderradaufhängung kann in derartigen Ausführungen eine motorische Lenkeinrichtung umfassen, insbesondere eine hydraulische oder elektrische Lenkeinheit. Die Lenkeinheit umfasst ein erstes Lenkglied, das an der Stützstruktur und/oder dem Motor abgestützt ist, und ein der Art der Lenkeinheit entsprechend mit dem ersten Lenkglied zusammenwirkendes zweites Lenkglied, das auf den Querlenker wirkt. Die Lenkeinheit kann ein Drehmotor und die Lenkglieder können entsprechend ein Stator und ein Rotor sein. Die Lenkeinheit kann stattdessen vorteilhafter auch als Lineareinheit mit relativ zueinander linear beweglichen Lenkgliedern gebildet sein. Ist die Lenkeinheit wie bevorzugt eine Hydraulikeinheit, umfasst die Lenkeinrichtung ferner eine Pumpe zur hydraulischen Druckbeaufschlagung der Hydraulikeinheit. Insbesondere kann eine hydraulische Lenkeinheit als Kolben-Zylinder-Einheit gebildet sein. Zweckmäßigerweise umfasst eine Lenkeinrichtung mit Linearlenkeinheit eine weitere Linearlenkeinheit gleicher Art. Die Linearlenkeinheiten sind vorzugsweise symmetrisch, die eine links und die andere rechts, in Bezug auf die Aufhängungs-Lenkachse angeordnet. Die Lenkeinrichtung kann einen Sensor zur Ermittlung der Lenkposition des Fahrzeuglenkers und eine Steuereinrichtung aufweisen, die aus Signalen des Sensors Steuersignale bildet und diese einem Steuerorgan der Lenkeinrichtung aufgibt, um die Lenkeinheit(en) in Abhängigkeit von den Lenkbewegungen des Fahrzeuglenkers zu steuern. Eine Lenkeinrichtung mit hydraulischer Lenkeinheit kann ein hydraulisches Steuerorgan, vorzugsweise Steuerventil, aufweisen, das hydraulisch vorzugsweise zwischen der Pumpe und der oder den Hydraulikeinheit(en) angeordnet ist. Vorteilhafte Merkmale werden auch in den Unteransprüchen und den Kombinationen von Unteransprüchen beschrieben.
Auch in den nachstehend formulierten Aspekten werden Merkmale der Erfindung beschrieben. Die Aspekte sind in der Art von Ansprüchen formuliert. In Klammern gesetzte Bezugszeichen beziehen sich auf ein nachfolgend in Figuren illustriertes Ausführungsbeispiel. Sie schränken die in den Aspekten beschriebenen Merkmale nicht unter den Wortsinn als solchen ein, zeigen andererseits jedoch bevorzugte Möglichkeiten der Verwirklichung des jeweiligen Merkmals auf.
Aspekt 1. Zwei- oder dreirädriges Fahrzeug mit Stützstruktur (1), Motor (2), Fahrzeuglenker (6), Hinterrad (4), Vorderrad (3) und einer Vorderradaufhängung (10), die Vorderradaufhängung (10) umfassend:
(a) einen in Draufsicht auf das Fahrzeug gesehen relativ zur Stützstruktur (1) schwenkbaren Querlenker (11), der mit dem Fahrzeuglenker (6) gekoppelt ist, um Lenkbewegungen des Fahrzeuglenkers (6) in die Vorderradaufhängung (10) einzuleiten,
(b) eine in Längsrichtung (X) des Fahrzeugs erstreckte Führungsschwinge (13), die mit dem Querlenker (11) gelenkig verbunden und über den Querlenker (11) an der Stützstruktur (1) oder dem Motor (2) abgestützt ist und das um eine Vorderradachse (Y₃) drehbare Vorderrad (3) lagert,
(c) eine Stoßdämpfungseinrichtung (30), die mit der Führungsschwinge (13) in einem in Längsrichtung (X) zwischen dem Querlenker (11) und der Vorderradachse (Y₃) gelegenen Bereich der Führungsschwinge (13) gelenkig verbunden ist, um auf das Vorderrad (3) wirkende Stoß- und Bremsbelastungen über die Führungsschwinge (13) zu dämpfen,
(d) wobei die Stoßdämpfungseinrichtung (30) auf der Höhe des Vorderrads (3) hinter dem Vorderrad angeordnet ist.

Aspekt 2. Fahrzeug nach dem vorhergehenden Aspekt, wobei
- die Vorderradaufhängung (10) eine in Längsrichtung (X) des Fahrzeugs erstreckte weitere Führungsschwinge (14) umfasst, die mit dem Querlenker (11) gelenkig verbunden und über den Querlenker (11) an der Stützstruktur (1) oder dem Motor (2) abgestützt ist,
- die Führungsschwingen (13, 14) gemeinsam das zwischen den Führungsschwingen (13, 14) um die Vorderradachse (Y₃) drehbar angeordnete Vorderrad (3) lagern
- und die Stoßdämpfungseinrichtung (30) auch mit der weiteren Führungsschwinge (14) in einem in Längsrichtung (X) zwischen dem Querlenker (11) und der Vorderradachse (Y₃) gelegenen Bereich der weiteren Führungsschwinge (14) gelenkig verbunden ist, um auf das Vorderrad (3) wirkende Stoß- und Bremsbelastungen über die Führungsschwingen (13, 14) zu dämpfen.

Aspekt 3. Fahrzeug nach wenigstens einem der vorhergehenden Aspekte, wobei die Führungsschwinge (13) oder die Führungsschwingen (13, 14) des Aspekts 2 um eine zur Vorderradachse (Y₃) zumindest im Wesentlichen parallele Aufhängungs-Schwenkachse (Y₁) relativ zu der Stützstruktur (1) oder dem Motor (2) schwenkbar ist oder sind.

Aspekt 4. Fahrzeug nach wenigstens einem der vorhergehenden Aspekte, wobei die Führungsschwinge (13) oder die Führungsschwingen (13, 14) des Aspekts 2 jeweils mittels eines Gelenks (15/16) mit dem Querlenker (11) verbunden und im jeweiligen Gelenk (15/16) in der Draufsicht auf das Fahrzeug gesehen relativ zum Querlenker (11) schwenkbeweglich ist oder sind, wobei das jeweilige Gelenk vorzugsweise ein Drehgelenk (15/16) ist.

Aspekt 5. Fahrzeug nach wenigstens einem der vorhergehenden Aspekte, wobei die Führungsschwinge (13) oder die Führungsschwingen (13, 14) des Aspekts 2 jeweils mittels eines Vorderrad-Schwenkgelenks (17/18) mit einem um die Vorderradachse (Y₃) drehbaren Wellenelement oder vorzugsweise einem das Vorderrad (3) drehbar lagernden Achselement (7) verbunden ist oder sind und das Vorderrad (3) in der Draufsicht auf das Fahrzeug gesehen relativ zu der oder den Führungsschwingen (13, 14) schwenkbeweglich ist, wobei das jeweilige Vorderrad-Schwenkgelenk (17/18) vorzugsweise ein Drehgelenk ist.

Aspekt 6. Fahrzeug nach wenigstens einem der vorhergehenden Aspekte, wobei die Stoßdämpfungseinrichtung (30) in Höhe des Vorderrads (3) hinter dem Vorderrad angeordnet ist.

Aspekt 7. Fahrzeug nach wenigstens einem der vorhergehenden Aspekte, wobei eine obere Abstützung (28) der Stoßdämpfungseinrichtung (30) im Ruhezustand des Fahrzeugs auf oder unter der Höhe des oberen Rands des Vorderrads (3) gelegen ist.

Aspekt 8. Fahrzeug nach wenigstens einem der vorhergehenden Aspekte, wobei die Stoßdämpfungseinrichtung (30) mittels eines Gelenks unmittelbar an der Stützstruktur (1) oder dem Motor (2) abgestützt ist.

Aspekt 9. Fahrzeug nach wenigstens einem der vorhergehenden Aspekte, wobei sich die Stoßdämpfungseinrichtung (30) zwischen einer oberen Abstützung (28) an der Stützstruktur (1) oder dem Motor (2) und einer unteren Abstützung (29) erstreckt und über die untere Abstützung auf die Führungsschwinge (13) oder Führungsschwingen (13, 14) des Aspekts 2 wirkt.

Aspekt 10. Fahrzeug nach wenigstens einem der vorhergehenden Aspekte, wobei sich die Stoßdämpfungseinrichtung (30) zwischen einer in Bezug auf die Längsrichtung (X) hinteren Abstützung (28) an der Stützstruktur (1) oder dem Motor (2) und einer vorderen Abstützung (29) erstreckt und über die vordere Abstützung (29) auf die Führungsschwinge (13) oder Führungsschwingen (13, 14) des Aspekts 2 wirkt.

Aspekt 11. Fahrzeug nach wenigstens einem der vorhergehenden Aspekte, wobei die Führungsschwinge (13) oder die Führungsschwingen (13, 14) nach Aspekt 2 und mit der oder den Führungsschwinge(n) das Vorderrad (3) über den Querlenker (11) in Längsrichtung (X) an der Stützstruktur (1) oder dem Motor (2) abgestützt ist oder sind.

Aspekt 12. Fahrzeug nach wenigstens einem der vorhergehenden Aspekte, wobei die Führungsschwinge (13) oder die Führungsschwingen (13, 14) nach Aspekt 2 und mit der oder den Führungsschwinge(n) das Vorderrad (3) über den Querlenker (11) in eine zur Vorderradachse (Y₃) zumindest im Wesentlichen parallele Querrichtung (Y) und/oder in eine zur Längsrichtung (X) und der Vorderradachse (Y₃) orthogonale Hochrichtung (Z) an der Stützstruktur (1) oder dem Motor (2) abgestützt ist oder sind.

Aspekt 13. Fahrzeug nach wenigstens einem der vorhergehenden Aspekte, wobei der Querlenker (11) relativ zu der Stützstruktur (1) oder dem Motor (2) in Bezug auf wenigstens eine Raumachse (X) eines stützstruktur- oder motorfesten kartesischen Koordinatensystems, vorzugsweise in Bezug auf jede der drei Raumachsen (X, Y, Z) des Koordinatensystems, abgesehen von Spiel, translatorisch unbeweglich ist.

Aspekt 14. Fahrzeug nach wenigstens einem der vorhergehenden Aspekte, wobei die Führungsschwinge (13) oder die Führungsschwingen (13, 14) nach Aspekt 2 relativ zum Querlenker (11) um eine zur Vorderradachse (Y₃) zumindest im Wesentlichen parallele Aufhängungs-Schwenkachse (Y₁) schwenkbar ist oder sind.

Aspekt 15. Fahrzeug nach wenigstens einem der vorhergehenden Aspekte, wobei die Führungsschwinge (13) oder die Führungsschwingen (13, 14) nach Aspekt 2 jeweils mittels eines Gelenks (11/15), vorzugsweise Drehgelenks (11/15), mit dem Querlenker (11) um eine zur Vorderradachse (Y₃) zumindest im Wesentlichen parallele Aufhängungs-Schwenkachse (Y₁) schwenkbar verbunden, vorzugsweise am Querlenker (11) schwenkbar gelagert ist oder sind.

Aspekt 16. Fahrzeug nach wenigstens einem der Aspekte 1 bis 13, wobei der Querlenker um eine zur Vorderradachse (Y₃) zumindest im Wesentlichen parallele Aufhängungs-Schwenkachse (Y₁) relativ zu der Stützstruktur oder dem Motor drehbar oder schwenkbar gelagert ist.

Aspekt 17. Fahrzeug nach wenigstens einem der vorhergehenden Aspekte in Kombination mit Aspekt 2, wobei der Querlenker (11), die Führungsschwingen (13, 14) und die Vorderradachse (Y₃) in der Draufsicht auf das Fahrzeug ein Mehrgelenk-Polygon, vorzugsweise Mehrgelenk-Parallelogramm, bilden, das an der Stützstruktur (1) oder dem Motor (2) um eine horizontale Querachse (Y₁) schwenkbeweglich abgestützt ist.

Aspekt 18. Fahrzeug nach wenigstens einem der vorhergehenden Aspekte, wobei der Querlenker (11) relativ zu der Stützstruktur (1) oder dem Motor (2) in der Draufsicht auf das Fahrzeug gesehen schwenkbar ist und die Führungsschwinge (13) oder die Führungsschwingen (13, 14) nach Aspekt 2 um eine zur Vorderradachse (Y₃) zumindest im Wesentlichen parallele Aufhängungs-Schwenkachse (Y₁) schwenkbar ist oder sind.

Aspekt 19. Fahrzeug nach wenigstens einem der vorhergehenden Aspekte, wobei die Führungsschwinge (13) oder die Führungsschwingen (13, 14) nach Aspekt 2 jeweils in einem vorderen Schwingenbereich mittels eines Vorderrad-Schwenkgelenks (17/18), vorzugsweise Drehgelenks (17/18), mit einem Wellenelement oder vorzugsweise einem das Vorderrad (3) um die Vorderradachse (Y₃) drehbar lagernden Achselement (7) verbunden ist oder sind.

Aspekt 20. Fahrzeug nach dem vorhergehenden Aspekt, wobei eine Gelenkachse (Z₃) des Vorderrad-Schwenkgelenks (17/18) die Vorderradachse (Y₃) kreuzt oder vorzugsweise schneidet, wobei die Vorderrad-Schwenkgelenks (17/18) vorzugsweise orthogonal zur Vorderradachse (Y₃) weist.

Aspekt 21. Fahrzeug nach wenigstens einem der vorhergehenden Aspekte, wobei der Querlenker (11) mittels eines ersten Drehgelenks (1/12) in der Draufsicht auf das Fahrzeug gesehen schwenkbar gelagert ist und die Führungsschwinge (13) oder die Führungsschwingen (13, 14) nach Aspekt 2 jeweils mittels eines zweiten Drehgelenks (11//15) um eine zur Vorderradachse (Y₃) zumindest im Wesentlichen parallele Aufhängungs-Schwenkachse (Y₁) schwenkbar gelagert ist oder sind, wobei das erste Drehgelenk (1/12) mit dem oder den zweiten Drehgelenken (11/15) vorzugsweise ein Kreuzgelenk (12) bildet.

Aspekt 22. Fahrzeug nach wenigstens einem der vorhergehenden Aspekte, wobei der Querlenker (11) mittels eines ersten Drehgelenks (1/12) in der Draufsicht auf das Fahrzeug gesehen schwenkbar gelagert ist und die Führungsschwinge (13) oder die Führungsschwingen (13, 14) nach Aspekt 2 mittels eines zweiten Drehgelenks (11//15) um eine zur Vorderradachse (Y₃) zumindest im Wesentlichen parallele Aufhängungs-Schwenkachse (Y₁) schwenkbar gelagert ist oder sind, wobei das erste Drehgelenk mit dem oder den zweiten Drehgelenken vorzugsweise ein Kreuzgelenk (12) bildet.

Aspekt 23. Fahrzeug nach wenigstens einem der vorhergehenden Aspekte, wobei der Querlenker (11) mittels eines Drehgelenks (1, 12) an der Stützstruktur (1) oder dem Motor (2) abgestützt ist, vorzugsweise unmittelbar an der Stützstruktur (1) oder dem Motor (2) abgestützt ist.

Aspekt 24. Fahrzeug nach wenigstens einem der vorhergehenden Aspekte, wobei der Querlenker (11) in der Draufsicht auf das Fahrzeug gesehen relativ zu der Stützstruktur (1) oder dem Motor (2) um die Gelenkachse (Z₁) eines als Drehgelenk gebildeten Querlenker-Schwenkgelenks (1, 12) schwenkbar ist.

Aspekt 25. Fahrzeug nach wenigstens einem der vorhergehenden Aspekte, wobei die Führungsschwinge (13) oder die Führungsschwingen (13, 14) nach Aspekt 2 jeweils mittels eines Drehgelenks (15, 16), vorzugsweise nur mittels des jeweiligen Drehgelenks (15, 16), in der Draufsicht auf das Fahrzeug gesehen um die Gelenkachse (Z₂) des jeweiligen Drehgelenks (15, 16) mit dem Querlenker (11) schwenkbeweglich verbunden ist oder sind.

Aspekt 26. Fahrzeug nach wenigstens einem der vorhergehenden Aspekte, wobei die Führungsschwinge (13) oder die Führungsschwingen (13, 14) nach Aspekt 2 jeweils das Vorderrad (3) mittels eines Drehgelenks (17, 18) um eine zur Vorderradachse (Y₃) nicht parallele, vorzugsweise orthogonale und noch bevorzugter radiale Schwenkachse (Z₃) schwenkbeweglich lagert.

Aspekt 27. Fahrzeug nach wenigstens einem der vorhergehenden Aspekte, wobei die Führungsschwinge (13) oder die Führungsschwingen (13, 14) nach Aspekt 2 jeweils mit dem Vorderrad (3) nur mittels eines oder mehrerer Drehgelenke rotatorisch beweglich verbunden ist oder sind.

Aspekt 28. Fahrzeug nach wenigstens einem der vorhergehenden Aspekte, wobei die Vorderradaufhängung (10) ferner einen Anlenkhebel (25) mit einem ersten Hebelarm und zweiten Hebelarm umfasst, die Stoßdämpfungseinrichtung (30) am ersten Hebelarm abgestützt und der zweite Hebelarm mittels Gelenkverbindung (20, 21, 22, 23, 25 26) in Bezug auf eine oder mehrere Achsen (Y₂, Y₅, Z₄, Z₅) gelenkig mit der Führungsschwinge (13), vorzugsweise gelenkig mit den Führungsschwingen (13, 14) des Aspekts 2 verbunden ist.

Aspekt 29. Fahrzeug nach dem vorhergehenden Aspekt, wobei der Anlenkhebel (25) relativ zu der Stützstruktur (1) oder dem Motor (2) in Bezug auf wenigstens eine Raumachse (X) eines stützstruktur- oder motorfesten kartesischen Koordinatensystems, vorzugsweise in Bezug auf jede der drei Raumachsen (X, Y, Z) des Koordinatensystems, translatorisch unbeweglich ist.

Aspekt 30. Fahrzeug nach wenigstens einem der zwei unmittelbar vorhergehenden Aspekte, wobei der Anlenkhebel (25) um eine Hebelschwenkachse (Y₄) relativ zu der Stützstruktur (1) oder dem Motor (2) schwenkbar ist und die Hebelschwenkachse (Y₄) zur Vorderradachse (Y₃) vorzugsweise zumindest im Wesentlichen parallel ist, wenn die Vorderradachse (Y₃) für Geradeausfahrt ausgerichtet ist.

Aspekt 31. Fahrzeug nach wenigstens einem der drei unmittelbar vorhergehenden Aspekte, wobei der Anlenkhebel (25) um eine Hebelschwenkachse (Y₄) schwenkbar an der Stützstruktur (1) oder dem Motor (2) abgestützt ist und einer der Hebelarme von der Hebelschwenkachse (Y₄) aus in die gleiche Richtung (X) über den anderen vorragt.

Aspekt 32. Fahrzeug nach wenigstens einem der zwei unmittelbar vorhergehenden Aspekte, wobei die Hebelarme von der Hebelschwenkachse (Y₄) aus in die gleiche Richtung (X) ragen und der zweite Hebelarm über den ersten Hebelarm vorragt, so dass die Stoßdämpfungseinrichtung (30) zwischen der Hebelschwenkachse (Y₄) und der Gelenkverbindung (20, 21, 22, 23, 25, 26), die den Anlenkhebel (25) mit der Führungsschwinge (13) oder den Führungsschwingen (13, 14) des Aspekts 2 verbindet, am Anlenkhebel (25) abgestützt ist.

Aspekt 33. Fahrzeug nach wenigstens einem der fünf unmittelbar vorhergehenden Aspekte, wobei der Anlenkhebel (25) mittels eines Drehgelenks (1, 25) um eine die Gelenkachse des Drehgelenks bildende Hebelschwenkachse (Y₄) schwenkbar an der Stützstruktur (1) oder Motor (2), vorzugsweise unmittelbar an der Stützstruktur (1) oder dem Motor (2) abgestützt ist.

Aspekt 34. Fahrzeug nach wenigstens einem der vier unmittelbar vorhergehenden Aspekte, wobei die Hebelschwenkachse (Y₄) die Gelenkachse eines Drehgelenks (1, 25) ist.

Aspekt 35. Fahrzeug nach wenigstens einem der sieben unmittelbar vorhergehenden Aspekte, wobei die Vorderradaufhängung (10) einen weiteren Querlenker (20) umfasst und der weitere Querlenker (20) in der Gelenkverbindung (20, 21, 22, 23, 25, 26) von Führungsschwinge (13 oder 14) und Anlenkhebel (25) angeordnet ist.

Aspekt 36. Fahrzeug nach wenigstens einem der acht unmittelbar vorhergehenden Aspekte, wobei die Hebelarme in Längsrichtung (X) erstreckt sind.

Aspekt 37. Fahrzeug nach wenigstens einem der neun unmittelbar vorhergehenden Aspekte, wobei die Führungsschwinge (13) oder die Führungsschwingen (13, 14) des Aspekts 2 nur mittels Drehgelenken (21, 22; 20, 21; 20, 23; 23, 26; 25, 26) rotatorisch beweglich mit dem Anlenkhebel (25) verbunden ist oder sind.

Aspekt 38. Fahrzeug nach wenigstens einem der zehn unmittelbar vorhergehenden Aspekte, wobei die Führungsschwinge (13) oder die Führungsschwingen (13, 14) des Aspekts 2, der Anlenkhebel (25), ein Abschnitt der Stützstruktur (1) oder des Motors (2) und ein gelenkig mit der jeweiligen Führungsschwinge (13 und/oder 14) und gelenkig mit dem Anlenkhebel (25) verbundener weiterer Querlenker (26) in einer Seitenansicht des Fahrzeugs ein Mehrgelenk-Polygon, Mehrgelenk-Parallelogramm, vorzugsweise bilden.

Aspekt 39. Fahrzeug nach wenigstens einem der vorhergehenden Aspekte, wobei der Fahrzeuglenker (6) um eine Lenkachse (Z₆) relativ zu der Stützstruktur (1) oder dem Motor (2) schwenkbar und zur Übertragung von Lenkbewegungen mittels einer Lenkstange (8) mit dem Querlenker (11) gekoppelt ist und die Lenkstange (8) mittels eines ersten Gelenks mit dem Fahrzeuglenker (6) verbunden ist.

Aspekt 40. Fahrzeug nach dem vorhergehenden Aspekt, wobei das erste Gelenk, das die Lenkstange (8) mit dem Fahrzeuglenker (6) verbindet, am Fahrzeuglenker (6) so angeordnet ist, das eine Gelenkachse (Z₇) dieses Gelenks von der Lenkradachse (6) einen ersten Abstand aufweist.

Aspekt 41. Fahrzeug nach dem vorhergehenden Aspekt, wobei die Lenkstange (8) mittels eines zweiten Gelenks (9) mit dem Querlenker (11) verbunden ist und eine Gelenkachse des zweiten Gelenks (9) von einer Aufhängungs-Lenkachse (Z₁), um die der Querlenker (11) schwenkbeweglich ist, einen zweiten Abstand aufweist, und wobei der erste Abstand und der zweite Abstand gleichgroß sind.

Aspekt 42. Fahrzeug nach einem der drei unmittelbar vorhergehenden Aspekte, wobei die Lenkstange (8) zur Übertragung der Lenkbewegungen des Fahrzeuglenkers (6) direkt oder über ein oder mehrere Zwischenglieder gelenkig mit dem Querlenker (11) verbunden ist.

Aspekt 43. Fahrzeug nach wenigstens einem der Aspekte 1 bis 38, ferner umfassend eine Lenkeinrichtung, beispielsweise eine elektrische oder elektrohydraulische Lenkeinrichtung, die zum Schwenken des Querlenkers (11) um eine Aufhängungs-Lenkachse (Z₁) mit dem Querlenker (11) mechanisch und mit dem Fahrzeuglenker (6) elektrisch oder hydraulisch gekoppelt ist, um Lenkbewegungen, die der Fahrzeuglenker (6) um eine Lenkachse (Z₆) relativ zu der Stützstruktur (1) oder dem Motor (2) ausführt, in Schwenkbewegungen des Querlenkers (11) um die Aufhängungs-Lenkachse (Z₁) umzuwandeln.

Aspekt 44. Fahrzeug nach dem vorhergehenden Aspekt, wobei die Lenkeinrichtung eine an der Stützstruktur (1) oder dem Motor (2) abgestützte und auf den Querlenker (11) wirkende Hydraulikeinheit, vorzugsweise Kolben-Zylinder-Einheit, und eine Pumpe zur hydraulischen Druckbeaufschlagung der Hydraulikeinheit aufweist.

Aspekt 45. Fahrzeug nach einem der zwei unmittelbar vorhergehenden Aspekte, wobei die Lenkeinrichtung ein hydraulisches Steuerorgan, vorzugsweise Steuerventil, das hydraulisch vorzugsweise zwischen der Pumpe und der Hydraulikeinheit angeordnet ist, ferner einen Sensor zur Ermittlung der Lenkposition des Fahrzeuglenkers und eine Steuereinrichtung aufweist, die aus Signalen des Sensors Steuersignale bildet und diese dem Steuerorgan aufgibt, um die Hydraulikeinheit in Abhängigkeit von den Lenkbewegungen des Fahrzeuglenkers (6) zu steuern.

Aspekt 46. Fahrzeug nach wenigstens einem der vorhergehenden Aspekte, wobei die Vorderradaufhängung (10) die Position eines Bremsnickzentrums (Y₁) in Längs- und Hochrichtung (X, Z) des Fahrzeugs so bestimmt, dass für das Fahrzeug ein Anti-dive 60-100 %, vorzugsweise Anti-dive 70-90 % erhalten wird.

Nachfolgend wird ein Ausführungsbeispiel der Erfindung anhand von Figuren erläutert. Am Ausführungsbeispiel offenbar werdende Merkmale bilden jeweils einzeln und in jeder Merkmalskombination die Gegenstände der Ansprüche und auch die vorstehend erläuterten Ausgestaltungen und Aspekte vorteilhaft weiter. Es zeigen:
- Figur 1: ein einspuriges Fahrzeug mit einer erfindungsgemäßen Vorderradaufhängung in einer Seitenansicht,
- Figur 2: die Vorderradaufhängung mit dem von ihr gelagerten Vorderrad und nur noch einem Teil des Stützstrukturs des Fahrzeugs in einer isometrischen Darstellung,
- Figur 3: die Anordnung der Figur 2 in Draufsicht mit gerade ausgerichtetem Vorderrad,
- Figur 4: die Anordnung der Figur 2 in Seitenansicht in einem Ausgangszustand,
- Figur 5: die Anordnung der Figur 2 in Draufsicht mit eingeschlagenem Vorderrad,
- Figur 6: die Anordnung der Figur 2 in Seitenansicht in einem eingefederten Zustand und
- Figur 7: eine Darstellung zum Anti-Dive.

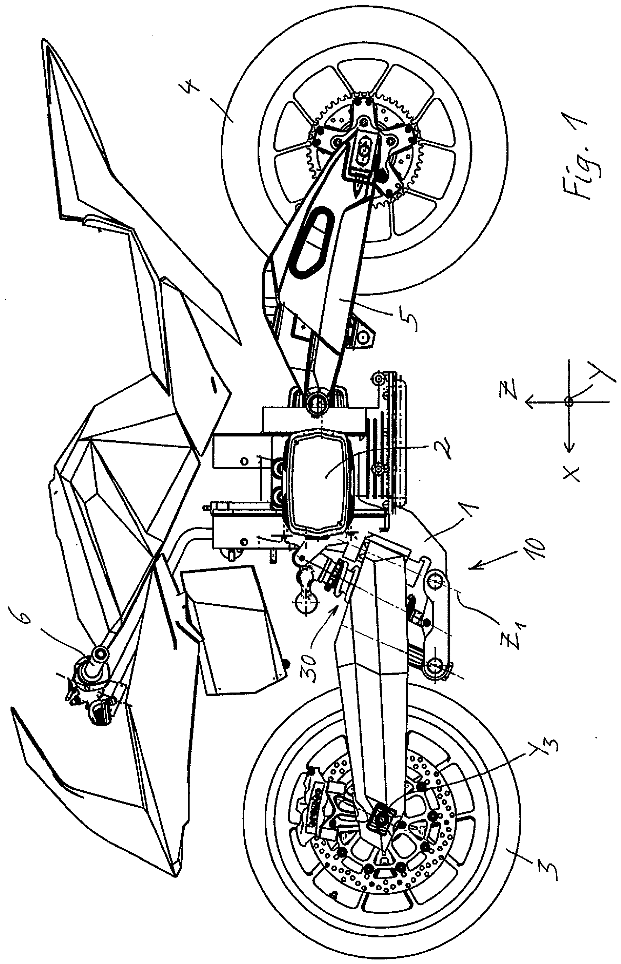

Figur 1 zeigt ein zweirädriges Fahrzeug in einer Seitenansicht. Bei dem Fahrzeug des Ausführungsbeispiels handelt es sich um ein Motorrad. Das Fahrzeug weist eine Stützstruktur 1, einen Motor 2, ein Vorderrad 3, ein Hinterrad 4 und einen Lenker 6 in Form einer Lenkstange auf. Das Fahrzeug baut auf den selbsttragenden Motor 2 auf, an dem die Stützstruktur 1 unbeweglich, das Hinterrad 4 mittels einer Hinterradaufhängung 5 schwenkbeweglich und weitere Fahrzeugkomponenten in an sich bekannter Weise befestigt sind. Das Vorderrad 3 wird von einer Vorderradaufhängung 10 um eine Vorderradachse Y₃ drehbeweglich und um eine querliegende Schwenkachse der Vorderradaufhängung 10 relativ zu Stützstruktur 1 und Motor 2 schwenkbeweglich gelagert. In einem relativ zu Stützstruktur 1 und Motor 2 unbeweglichen kartesischen Koordinatensystem ist eine Längsachse oder Längsrichtung des Fahrzeugs mit X, eine Querachse oder Querrichtung mit Y und die zu den beiden Achsen X und Y orthogonale Hochachse oder Hochrichtung mit Z bezeichnet. Die Vorderradaufhängung 10 umfasst eine Stoßdämpfungseinrichtung 30 zur Dämpfung von auf das Vorderrad 3 wirkenden Stoßbelastungen.

Die Vorderradaufhängung 10 ist einschließlich der Stoßdämpfungseinrichtung 30 raumsparend auf der Höhe des Vorderrads 3 hinter dem Vorderrad 3 angeordnet. Wie bevorzugt, aber nur beispielhaft, überragt das Vorderrad 3 die Vorderradaufhängung 10 einschließlich der Stoßdämpfungseinrichtung 30. Entsprechend tief liegt der Schwerpunkt der Vorderradaufhängung 10, wobei hier wie auch im Folgenden stets die Stoßdämpfungseinrichtung 30 als ein Bestandteil der Vorderradaufhängung 10 verstanden wird. In bevorzugten Ausführungen, wie etwa im Ausführungsbeispiel, liegt der Schwerpunkt der Stoßdämpfungseinrichtung 10 unterhalb des Schwerpunkts des Motors 2. Der Schwerpunkt der Vorderradaufhängung 10 kann insbesondere auf der Höhe der Vorderradachse Y₃ ± 10 cm liegen.

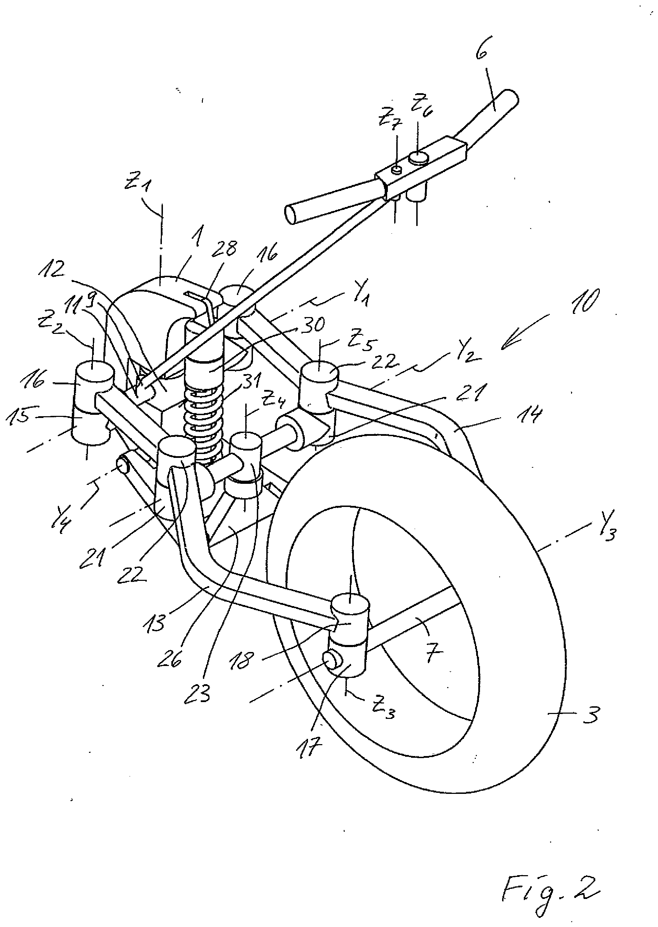

Figur 2 zeigt in einer isometrischen Darstellung die Vorderradaufhängung 10, das Vorderrad 3, einen Teil der Stützstruktur 1, den Fahrzeuglenker 6 und dessen gelenkige Verbindung mit der Vorderradaufhängung 10. Verkleidungen und die Bremsanlage des Vorderrads 3 sind abgenommen. Das Vorderrad 3 ist stilisiert nur mit Reifen und zentralem Achselement 7 dargestellt. Das Vorderrad 3 ist auf dem Achselement 7 um die Vorderradachse Y₃ drehbar gelagert. Die Vorderradaufhängung 10 lagert das Achselement 7 und damit gemeinsam das Vorderrad 3. In einer Modifikation könnte die Vorderradaufhängung 10 anstelle des von ihr drehunbeweglich aufgenommenen Achselements 7 ein drehunbeweglich mit dem Vorderrad 3 verbundenes Wellenelement drehbar lagern. Im Beispiel kommt jedoch wie bevorzugt ein herkömmlich drehbar gelagertes Vorderrad 3 zum Einsatz.

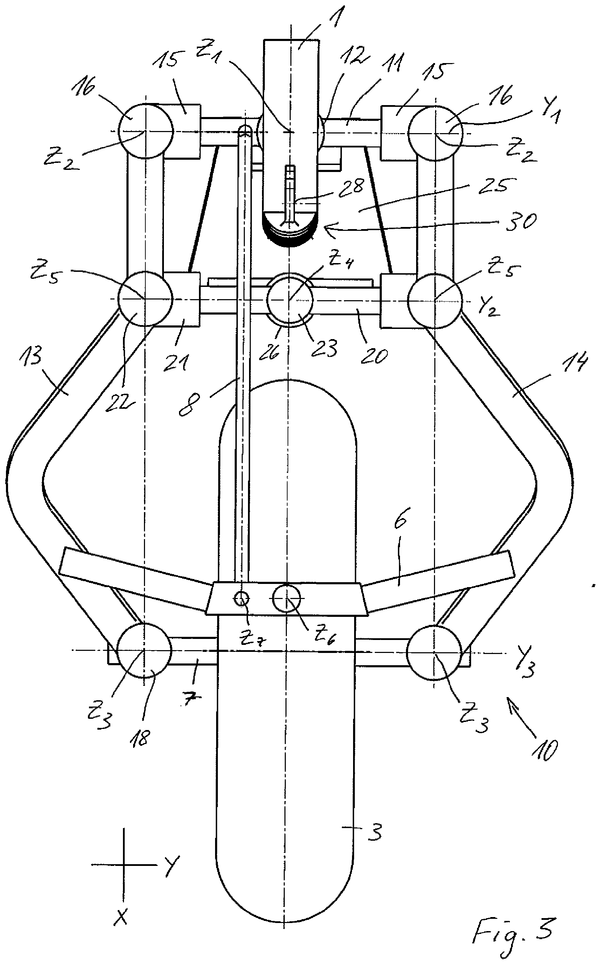

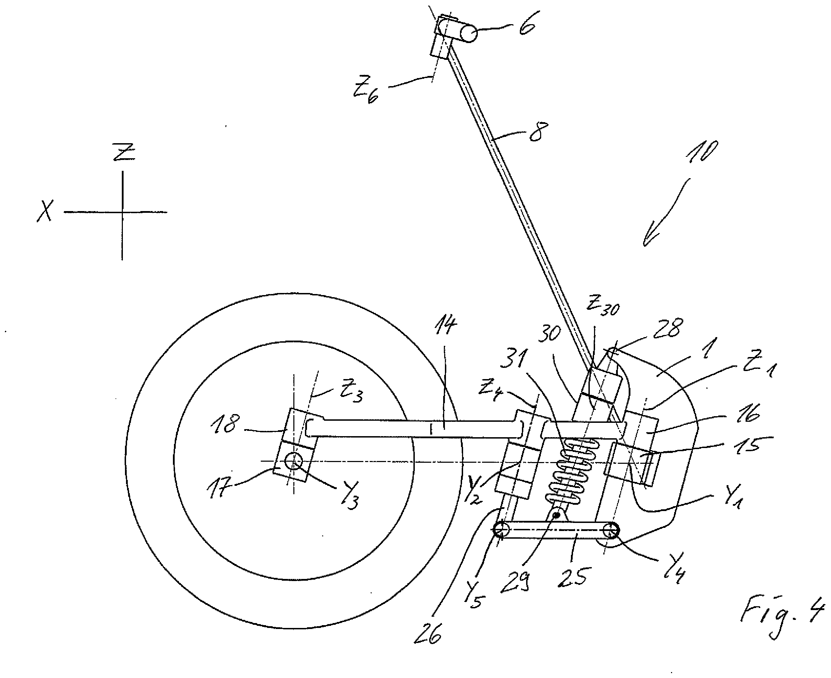

Die Figuren 3 und 4 zeigen die Anordnung der Figur 2 in einer Draufsicht und in einer Seitenansicht. Das Vorderrad 3 ist in beiden Sichten für Geradeausfahrt ausgerichtet. Die Vorderradaufhängung 10 ist jeweils in einem Ruhezustand dargestellt, den sie im Stand des Fahrzeugs ohne Fahrer oder andere äußere Last, einnimmt.

Die Vorderradaufhängung 10 umfasst einen in Bezug auf die Längs- bzw. Fahrtrichtung X hinteren Querlenker 11, der relativ zur Stützstruktur 1 um eine Aufhängungs-Lenkachse Z₁ schwenkbar ist. Sie umfasst ferner eine rechte Führungsschwinge 13 und eine linke Führungsschwinge 14, die jeweils in einem hinteren Schwingenbereich gelenkig mit dem Querlenker 11 verbunden sind. Die Führungsschwingen 13 und 14 lagern gemeinsam in einem vorderen Schwingenbereich das um die Vorderradachse Y₃ drehbewegliche Vorderrad 3, indem sie das Achselement 7 aufnehmen bzw. tragen.

Die Führungsschwingen 13 und 14 sind mittels jeweils eines Gelenks 15/16 mit dem Querlenker 11 in der Draufsicht gesehen um Lenkachsen Z₁ schwenkbeweglich verbunden. Die Führungsschwingen 13 und 14 sind im jeweils vorderen Schwingenbereich mittels Vorderrad-Lenkgelenken 17/18 in der Draufsicht gesehen auch schwenkbeweglich mit dem Vorderrad 3 verbunden, wie bevorzugt, aber nur beispielhaft, mittels jeweils eines einzigen Vorderrad-Lenkgelenks 17/18. Die Lenkachsen bildenden Gelenkachsen des linken und des rechten vorderen Vorderrad-Lenkgelenks 17/18 sind jeweils mit Z₃ bezeichnet. Mit den Bezugszeichen 15, 16 und 17, 18 sind die in den Gelenken relativ zueinander um die jeweilige Gelenkachse drehbaren Gelenkelemente bezeichnet. Wie bevorzugt, aber nur beispielhaft, sind die hinteren Gelenke 15/16 und/oder die Vorderrad-Lenkgelenke 17/18 als Drehgelenke gebildet, d. h. als Gelenke mit jeweils nur einem einzigen Freiheitsgrad, nämlich der Rotation um die jeweilige Gelenkachse Z₂ und Z₃. Derartige Gelenke können präzise, in stabiler Bauweise, insbesondere mit geringem Losbrechmoment, aber dennoch vergleichsweise preiswert gefertigt werden.

Die Führungsschwingen 13 und 14 sind gemeinsam um eine Aufhängungs-Schwenkachse Y₁ relativ zur Stützstruktur 1 schwenkbeweglich. Die Aufhängungs-Schwenkachse Y₁ erstreckt sich zumindest im Wesentlichen, vorzugsweise genau, parallel zur Vorderradachse Y₃. Das Vorderrad 3 macht jegliche von den Führungsschwingen 13 und 14 um die Aufhängungs-Schwenkachse Y₁ ausgeführte Schwenkbewegung mit. Die Führungsschwingen 13 und 14 sind relativ zum hinteren Querlenker 11 um die Aufhängungs-Schwenkachse Y₁ schwenkbeweglich, indem sie mit dem Querlenker 11 mittels jeweils eines Aufhängungs-Schwenkgelenks 11/15 verbunden sind. Die Aufhängungs-Schwenkachse Y₁ ist die Gelenkachse des rechten und des linken Aufhängungs-Schwenkgelenks 11/15. Aufgrund dieser Relativbeweglichkeit der Führungsschwingen 13 und 14 kann der Querlenker 11 in Bezug auf die Aufhängungs-Schwenkachse Y₁ rotatorisch unbeweglich sein. In Modifikationen könnten die Führungsschwingen 13 und 14 jedoch mit dem Querlenker 11 bezüglich der Schwenkbeweglichkeit um Y₁ unbeweglich verbunden und der Querlenker 11 um die Aufhängungs-Schwenkachse Y₁ gemeinsam mit den Führungsschwingen 13 und 14 relativ zur Stützstruktur 1 schwenkbar sein.

Die Gelenkelemente 15 der beiden hinteren Gelenkanordnungen 11/15/16 sind unter Bildung der Gelenke 11/15 um die Aufhängungs-Schwenkachse Y₁ jeweils drehbar mit dem Querlenker 11 und unter Bildung der Gelenke 15/16 um die jeweilige Lenkachse Z₂ drehbar mit den Gelenkelementen 16 verbunden. Die Gelenkelemente 16 sind unbeweglich mit der jeweiligen Führungsschwinge 13 bzw. 14 verbunden und können getriebetechnisch dementsprechend als feste Bestandteile der Führungsschwingen 13 und 14 angesehen werden. Die beiden Gelenke 11/15 und 15/16 der rechten und der linken Gelenkanordnung 11/15/16 sind wie bevorzugt, aber nur beispielhaft als Drehgelenke ausgeführt, wodurch die Losbrechmomente in den Lagern dieser Gelenke gering gehalten werden und die Lenkung auch unter Seitenkrafteinfluss feinfühlig anspricht.

Der Querlenker 11 ist mittels eines Aufhängungs-Lenkgelenks 1/12 mit der Stützstruktur 1 um die Aufhängungs-Lenkachse Z₁ schwenkbeweglich verbunden. Das Gelenkelement 12 ist zumindest bezüglich der Lenkachse Z₁ drehunbeweglich mit dem Querlenker 11 verbunden. Wie bevorzugt, aber nur beispielhaft, ist das Gelenkelement 12 relativ zum Querlenker 11 gänzlich unbeweglich und kann als fester Bestandteil des Querlenkers 11 angesehen werden. Die Stützstruktur 1 bildet das andere Gelenkelement des Lenkgelenks 1/12. Wie bevorzugt, aber nur beispielhaft, ist das Gelenk 1/12 ein Drehgelenk, also ein einachsiges Gelenk mit nur einem einzigen Gelenkfreiheitsgrad. Das zentrale Aufhängungs-Lenkgelenk 1/12 bildet mit den Aufhängungs-Schwenkgelenken 11/15 ein Kreuzgelenk mit einander schneidenden Achsen Y₁, und Z₁. Die Lenkstange 8 ist in sich ausreichend steif, so dass sie innerhalb der Übertragungsstrecke der Lenkbewegung des Fahrzeuglenkers 6 als Starrkörper betrachtet werden kann.

Um die Lenkbewegungen des Fahrzeuglenkers 6 in Lenkbewegungen des Vorderrads 3 zu übertragen, ist die Lenkstange 6 mit dem hinteren Querlenker 11 gekoppelt, so dass dieser den Lenkbewegungen des Fahrzeuglenkers 6 entsprechend um die Aufhängungs-Lenkachse Z₁ verschwenkt wird. Die Kopplung wird wie bevorzugt, aber nur beispielhaft, mit nur einer einzigen Lenkstange 8 bewirkt. Der Fahrzeuglenker 6 ist relativ zur Stützstruktur 1 um eine Fahrzeug-Lenkachse Z₆ schwenkbar. Die Lenkstange 8 ist mit dem Fahrzeuglenker 6 mittels eines Gelenks mit Gelenkachse Z₇ verbunden. Die Gelenkachse Z₇ ist von der Fahrzeug-Lenkachse Z₆ beabstandet, so dass um die Fahrzeug-Lenkachse Z₆ erfolgende Lenkbewegungen des Fahrzeuglenkers 6 Bewegungen der Gelenkachse Z₇ um die Fahrzeug-Lenkachse Z₆ bewirken. Die Lenkstange 8 ist ferner mittels einer Gelenkverbindung 9 mit dem Querlenker 11 verbunden, so dass Bewegungen der Gelenkachse Z₇ um die Fahrzeug-Lenkachse Z₆ Schwenkbewegungen des Querlenkers 11 um die Aufhängungs-Lenkachse Z₁ und somit gegenläufige Lenkbewegungen der Führungsschwingen 13 und 14 und Auslenkungen der Vorderradachse Y₃ bewirken. Die Lenkachse Z₆ und die Gelenkachse Z₇ sind wie bevorzugt, aber nur beispielhaft parallel.

Das Gelenk mit der Gelenkachse Z₇ ist vorzugsweise ein Drehgelenk. Das Gelenk 9 ist vorzugsweise ebenfalls ein Drehgelenk. Seine Gelenkachse ist zur Aufhängungs-Lenkachse Z₁ vorzugsweise parallel. Des Weiteren sind zweckmäßigerweise die Aufhängungs-Lenkachse Z₁ und die Lenkachse Z₆ parallel, so dass in bevorzugten Ausführungen sämtliche Achsen Z₁, Z₆, Z₇ und die Gelenkachse des Gelenks 9 parallel voneinander beabstandet sind.

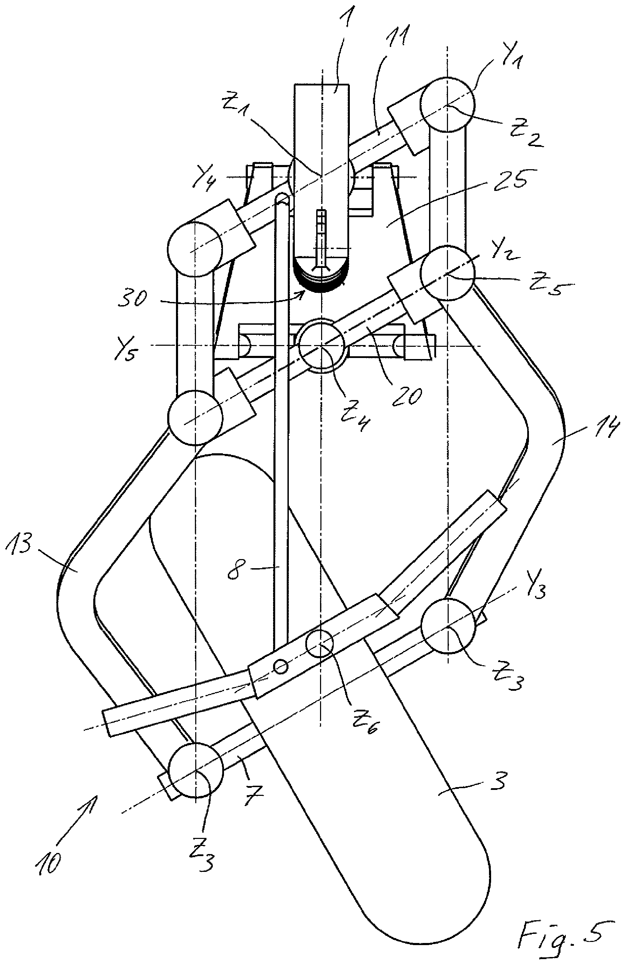

Die Funktionsweise der Vorderradaufhängung 10 beim Lenken ist in den beiden Draufsichten der Figuren 3 und 5 veranschaulicht. Die Lenkfunktion wird durch ein Mehrgelenk-Parallelogramm erfüllt, das der hintere Querlenker 11, die Führungsschwingen 13 und 14, das Vorderradachselement 7 und die verbindenden Gelenke 15/16 und 17/18 bilden.

Die Dämpfungseinrichtung 30 ist zum einen an der Stützstruktur 1 abgestützt und wirkt zum anderen über eine Hebel- und Gelenkanordnung auf die Führungsschwingen 13 und 14. Diese Anordnung umfasst einen Anlenkhebel 25 und mehrere Gelenke, die gemeinsam eine Gelenkverbindung von Anlenkhebel 25 und Führungsschwingen 13 und 14 bilden. Die Dämpfungseinrichtung 30 umfasst eine mechanische Feder 31, die zweckmäßigerweise als Schraubendruckfeder ausgebildet und angeordnet ist, und einen Dämpfer, der insbesondere ein pneumatischer Dämpfer sein kann. Die Dämpfungseinrichtung 30 wirkt entlang einer Dämpfungsachse Z₃₀, die am besten in Figur 4 erkennbar ist. Die Dämpfungsachse Z₃₀ weist wie bevorzugt, aber nur beispielhaft, zumindest im Wesentlichen parallel zur Aufhängungs-Lenkachse Z₁. Die Dämpfungseinrichtung 30 ist in einer oberen Abstützung 28 an der Stützstruktur 1 und in einer unteren Abstützung 29 am Anlenkhebel 25 abgestützt. Die Abstützungen 28 und 29 werden jeweils durch Gelenke gebildet, in denen die Dämpfungsachse Z₃₀ relativ zur Stützstruktur 1 und relativ zum Anlenkhebel 25 um querweisende Achsen schwenkbeweglich ist.

Der Anlenkhebel 25 ist relativ zur Stützstruktur 1 um eine Hebelschwenkachse Y₄ schwenkbeweglich. Die Hebelschwenkachse Y₄ ist zu der Vorderradachse Y₃ zumindest im Wesentlichen parallel. Vorzugsweise sind die beiden Achsen genau parallel. Der Anlenkhebel 25 erstreckt sich von der Hebelschwenkachse Y₄ aus in Längsrichtung X nach vorne, in Richtung auf das Vorderrad 3. Der Anlenkhebel 25 ist in einem weiteren Schwenkgelenk 25/26 mit zur Vorderradachse Y₃ zumindest im Wesentlichen, vorzugsweise genau paralleler Schwenkachse Y₅ (Figur 4) mit einer Gelenkstruktur 26 schwenkbeweglich verbunden. Die Gelenkstruktur 26 dient der gelenkigen Verbindung des Anlenkhebels 25 mit den Führungsschwingen 13 und 14.

Die Dämpfungseinrichtung 30 wirkt über ihre untere Abstützung 29 in einem zwischen der Hebelschwenkachse Y₄ und dem Schwenkgelenk 25, 26 liegenden Hebelbereich auf den Anlenkhebel 25. Der Anlenkhebel 25 bildet somit zwei in Richtung auf das Vorderrad 3 erstreckte Hebelarme, nämlich einen ersten Hebelarm, der sich von der Hebelschwenkachse Y₄ bis zur unteren Abstützung 29 erstreckt, und einen über den ersten Hebelarm hinaus bis zur Schwenkachse Y₅ des Schwenkgelenks 25/26 erstreckten zweiten Hebelarm. Schwenkbewegungen des Vorderrads 3 werden in die Dämpfungseinrichtung 30 dem Hebelarmverhältnis entsprechend untersetzt eingeleitet.

Für den Erhalt eines tiefliegenden Schwerpunkts ist günstig, dass die Dämpfungseinrichtung 30 unterhalb der Führungsschwingen 13 und 14, im Ausführungsbeispiel auch unterhalb der Vorderradachse Y₃ auf den Anlenkhebel 25 wirkt. Vorteilhaft ist in diesem Sinne auch, dass der Anlenkhebel 25 im Ganzen und nicht nur die untere Abstützung 29 tiefer als die Führungsschwingen 13 und 14, im Ausführungsbeispiel auch tiefer als die Vorderradachse Y₃, angeordnet ist. Im Vergleich zu bekannten Vorderradaufhängungen kann die Dämpfungseinrichtung 30 daher ebenfalls tiefer liegend angeordnet werden.

In Modifikationen kann die Dämpfungseinrichtung 30 mit größerer Neigung zur Hochachse Z bzw. mit stärker geneigter Dämpfungsachse Z₃₀ angeordnet werden. Die Dämpfungseinrichtung 30 kann horizontal liegend oder sogar mit negativer Neigung zur Hochachse Z angeordnet werden. In solch flacheren Anordnungen kann die Dämpfungseinrichtung 30 in Längsrichtung X auch mit dem Motor 2 überlappend angeordnet sein und unter den Motor 2 ragen. Der Motor 2 kann an seiner Unterseite beispielsweise eine Ausnehmung aufweisen, in die solch eine Dämpfungseinrichtung 30 ragt. In weiteren Modifikationen können die Dämpfungseinrichtung 30 und der Anlenkhebel 25 höher angeordnet werden, beispielsweise auf der Höhe der Führungsschwingen 13 und 14 zwischen diesen oder im Raum über den Führungsschwingen 13 und 14, um eine größere Bodenfreiheit zu erhalten. Derartige Anordnungen können für Enduros und andere geländetaugliche Fahrzeuge von Vorteil sein. Eine höherliegende Dämpfungseinrichtung kann wie im Ausführungsbeispiel geneigt oder, sollte die Bauhöhe beispielsweise kritisch werden, mit flacherer Neigung als im Beispiel angeordnet werden. Innerhalb der Gelenkverbindung mit den Führungsschwingen 13 und 14 wird für eine der jeweiligen Modifikation angepasste Umlenkung gesorgt.

Die Gelenkstruktur 26 ist über einen weiteren Querlenker 20 jeweils gelenkig mit den Führungsschwingen 13 und 14 verbunden. Dieser vordere Querlenker 20 ist relativ zur Gelenkstruktur 26 in einem zentralen Gelenk 23/26 um eine zur Aufhängungs-Lenkachse Z₁ parallele Lenkachse Z₄ schwenkbeweglich. Das Gelenkelement 23 des Gelenks 23/26 ist fester Bestandteil des vorderen Querlenkers 20. Der Querlenker 20 ist in einem rechten Gelenk 20/21 mit der rechten Führungsschwinge 13 und in einem linken Gelenk 20/21 mit der linken Führungsschwinge 14 jeweils um eine zur Aufhängungs-Schwenkachse Y₁ parallele Schwenkachse Y₂ schwenkbeweglich verbunden. Wie bevorzugt, obgleich nur beispielhaft, werden die Gelenke 23/26 und 20/21 jeweils durch ein einachsiges Gelenk, ein Drehgelenk, verwirklicht, von denen eines die Lenkachse Z₄ als Gelenkachse und die beiden anderen die Schwenkachse Y₂ als Gelenkachse aufweisen. Die Gelenke 20/23 und 23/26 bilden ein Kreuzgelenk, indem die Lenkachsen Z₄ die Achse Y₂ jeweils schneiden.

Der Querlenker 20 ist in einem mittleren rechten Gelenk 21/22 um eine Lenkachse Z₅ mit der rechten Führungsschwinge 13 und auf der gegenüberliegenden Seite mittels eines mittleren linken Gelenks 21/22 um eine parallele Lenkachse Z₅ (Fig. 3) schwenkbeweglich mit der linken Führungsschwinge 14 verbunden. Bei der Ausführung von Lenkbewegungen schwenken der hintere Querlenker 11 und der vordere Querlenker 20 gleichsinnig und im gleichen Ausmaß um ihre Lenkachse Z₁ bzw. Z₄. Die von den Querlenkern 11 und 20 bestimmten Schwenkachsen Y₁ und Y₂ weisen also stets parallel zueinander und zur Vorderradachse Y₃.

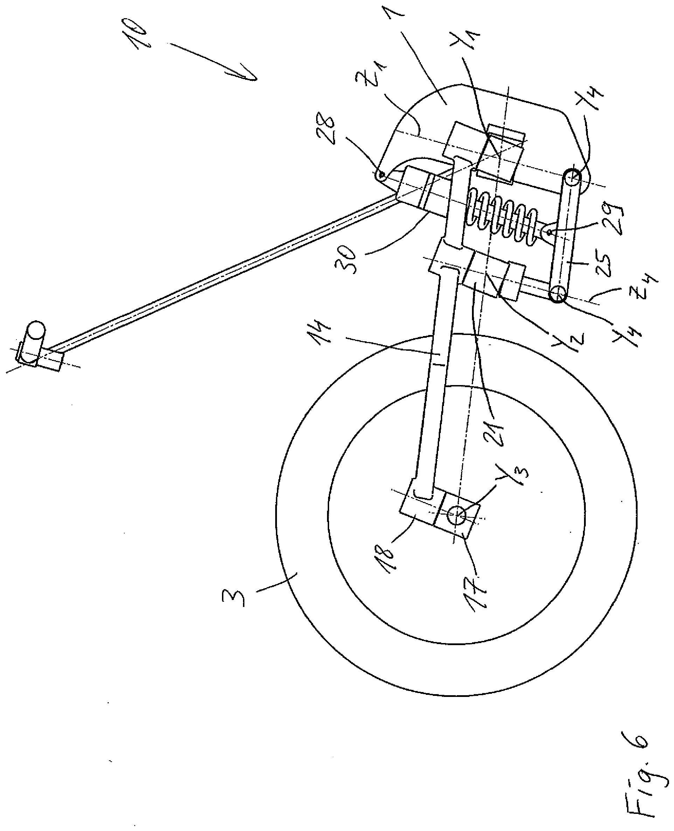

Innerhalb der Gelenkverbindung von Anlenkhebel 25 und vorderem Querlenker 20 werden die Längenvariationen ausgeglichen, welche die Dämpfungseinrichtung 30 beim Dämpfen von auf das Vorderrad 3 wirkenden Kräften erfährt. Die diesbezüglichen Relativbewegungen sind beispielsweise aus dem Vergleich der beiden Seitenansichten der Figuren 4 und 6 erkennbar, wobei Figur 6 die Vorderradaufhängung 10 in einem eingefederten Zustand zeigt.

Mittels der erfindungsgemäßen Vorderradaufhängung, wie etwa der Vorderradaufhängung 10 des Ausführungsbeispiels, wird die Lenkungsfunktion von Stoßkräften, die radial zur Vorderradachse und im Wesentlichen orthogonal zur Längsachse des Fahrzeugs wirken, entkoppelt. Die Stoßkräfte werden über den vorderen Schwingenbereich der Führungsschwingen und die den Anlenkhebel umfassende gelenkige Verbindung der Führungsschwingen mit der Dämpfungseinrichtung in die Dämpfungseinrichtung eingeleitet und über diese aufgenommen. Der um die Aufhängungs-Lenkachse schwenkbewegliche Querlenker, über den vorzugsweise die Lenkbewegungen in die Vorderradaufhängung kann von Stoßkräften gänzlich oder zumindest weitestgehend freigehalten werden. Dieser Querlenker muss lediglich die im Vergleich zu Stoßkräften sich nur langsam aufbauenden Verzögerungskräfte, die in Längsrichtung des Fahrzeugs wirken, aufnehmen und die im Vergleich zu den Stoßkräften geringen Lenkungskräfte auf die Führungsschwingen übertragen. Querlenker und Führungsschwingen nehmen ferner die insbesondere bei Kurvenfahrt wirkenden Seitenkräfte auf. Die Seitenkräfte werden vorteilhafterweise auch vom Anlenkhebel aufgenommen und somit in der Vorderradaufhängung verteilt.

Für die Feinfühligkeit der Lenkung ist von Vorteil, dass diejenigen Gelenke, die um jeweils eine Lenkachse Zᵢ relativ zueinander bewegliche Gelenkelemente aufweisen, um in Draufsicht gesehen Schwenkbewegungen, d.h. Lenkbewegungen, zu ermöglichen, jeweils Drehgelenke sind. Im Ausführungsbeispiel sind dies die Lenkgelenke 1/12, 15/16, 17/18, 21/22 und 23/26. Derartige Gelenke weisen auch unter Last nur geringe Losbrechmomente auf, was ebenfalls der Feinfühligkeit der Lenkung zugutekommt. Die Drehgelenke mit Lenkfunktion sind vorzugsweise jeweils mit Wälzlagerung gebildet. Von Vorteil ist, wenn die Schwenkgelenke, die jeweils eine in Querrichtung Y weisende Gelenkachse Yᵢ aufweisen, um Schwenkbewegungen bei auf das Vorderrad wirkender Stoßkraft zu ermöglichen, jeweils Drehgelenke sind. Im Ausführungsbeispiel sind dies die Schwenkgelenke 11/15, 21/22, 1/25 und 25/26. Diese Drehgelenke sind vorzugsweise jeweils mit einer Wälzlagerung gebildet. Die Aufspaltung in Drehgelenke mit Lenkachsen und Drehgelenke mit Schwenkachsen, wobei die Lenkachsen orthogonal zu den Schwenkachsen weisen, fördert die Feinfühligkeit der Lenkung zusätzlich zur Entkopplung der Lenkung von den Stoßkräften.

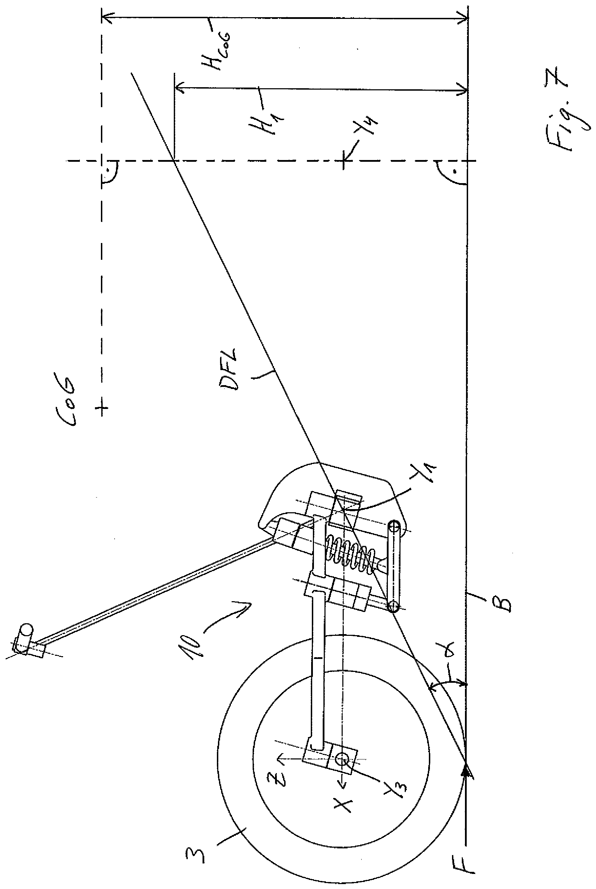

Figur 7 veranschaulicht den im Hinblick auf das Bremsnickverhalten bzw. Eintauchverhalten beim Bremsen relevanten Anti-dive. Dargestellt sind das Vorderrad 3, die Vorderradaufhängung 10 und die Drehachse Y_{H} des Hinterrads 4 (Figur 1). Eingezeichnet ist ferner der Schwerpunkt CoG (Center of Gravity), wie die Hinterradachse Y_{H} allerdings nur qualitativ und nicht maßstabsgetreu. Das Maß für den Anti-dive ist das Verhältnis H₁ : H_{CoG} in Prozent. Ein Anti-dive aus dem besonders bevorzugten Bereich von 80 ± 5% kann bei der erfindungsgemäßen Vorderradaufhängung 10 konstruktiv sehr einfach durch entsprechende Wahl der Position des Momentanpols bzw. des Bremsnickzentrums, das auf der Aufhängungs-Schwenkachse Y₁ liegt, eingestellt werden. Um den Anti-dive zu verändern, kann bei gleichbleibendem Abstand der beiden Radachsen Y₃ und Y_{H} der zwischen der als eben angenommenen Fahrbahn B und der Geraden DFL gemessene Winkel α durch Veränderung der Position der Aufhängungs-Schwenkachse Y₁ in Längsrichtung X und/oder Hochrichtung Z eingestellt werden. Die Gerade DFL ist die sogenannte Dive Force Line, die den momentanen Ort des Kontakts von Vorderrad 3 und Fahrbahn B, an dem die Reibkraft F angreift, mit dem auf der Achse Y₁ liegenden Bremsnickzentrum verbindet. Der Schnittpunkt der Geraden DFL mit einer die Hinterradachse Y_{H} schneidenden Vertikalen ergibt den Abstand H₁ von der Fahrbahn B. Vorteile von Anti-dive 0-100% und insbesondere von Anti-dive 60-100% oder 70-90% sind, dass die Federung beim Bremsen entlastet wird, Federweg und Ansprechverhalten der Dämpfungseinrichtung und Lenkung jedoch erhalten bleiben und die Fahrzeug-Geometrie beim Bremsen nicht extrem verändert wird. Das Fahrzeug bleibt auch beim Bremsen stabil und der Fahrkomfort steigt. Zum Schwerpunkt CoG ist noch nachzutragen, dass dessen Position unter Einbeziehung des Fahrers, beispielsweise eines Normfahrers mit einem Gewicht von 90 kg, bestimmt wird.

### Bezugszeichen:

- 1: Stützstruktur
- 2: Motor
- 3: Vorderrad
- 4: Hinterrad
- 5: Hinterradaufhängung
- 6: Fahrzeuglenker
- 7: Achselement
- 8: Lenkstange
- 9: Gelenkverbindung
- 10: Vorderradaufhängung
- 11: hinterer Querlenker
- 12: Gelenkelement
- 13: rechte Führungsschwinge
- 14: linke Führungsschwinge
- 15: Gelenkelement
- 16: Gelenkelement
- 17: Gelenkelement
- 18: Gelenkelement
- 19: -
- 20: vorderer Querlenker
- 21: Gelenkelement
- 22: Gelenkelement
- 23: Gelenkelement
- 24: -
- 25: Anlenkhebel
- 26: Gelenkstruktur
- 27: -
- 28: Abstützung
- 29: Abstützung
- 30: Stoßdämpfungseinrichtung
- 31: Feder

- X: Längsachse, Längsrichtung
- Y: Querachse, Querrichtung
- Z: Hochachse, Hochrichtung

- Y₁: Aufhängungs-Schwenkachse
- Y₂: Schwenkachse
- Y₃: Vorderradachse
- Y₄: Hebelschwenkachse
- Y₅: Schwenkachse
- Z₁: Aufhängungs-Lenkachse
- Z₂: Lenkachse
- Z₃: Vorderrad-Lenkachse
- Z₄: Lenkachse
- Z₅: Lenkachse
- Z₆: Fahrzeug-Lenkachse
- Z₇: Gelenkachse

## Patentansprüche

1. Zwei- oder dreirädriges Fahrzeug mit Stützstruktur (1), Motor (2), Fahrzeuglenker (6), Hinterrad (4), Vorderrad (3) und einer Vorderradaufhängung (10), die Vorderradaufhängung (10) umfassend:
(a) einen in Draufsicht auf das Fahrzeug gesehen relativ zur Stützstruktur (1) schwenkbaren Querlenker (11), der mit dem Fahrzeuglenker (6) gekoppelt ist, um Lenkbewegungen des Fahrzeuglenkers (6) in die Vorderradaufhängung (10) einzuleiten,
(b) eine in Längsrichtung (X) des Fahrzeugs erstreckte Führungsschwinge (13), die mit dem Querlenker (11) gelenkig verbunden und über den Querlenker (11) an der Stützstruktur (1) oder dem Motor (2) abgestützt ist und das um eine Vorderradachse (Y₃) drehbare Vorderrad (3) lagert,
(c) eine Stoßdämpfungseinrichtung (30), die auf der Höhe des Vorderrads (3) hinter dem Vorderrad (3) angeordnet ist, **dadurch gekennzeichnet, dass** die Stoßdämpfungseinrichtung mit der Führungsschwinge (13) in einem in Längsrichtung (X) zwischen dem Querlenker (11) und der Vorderradachse (Y3) gelegenen Bereich der Führungsschwinge (13) gelenkig verbunden ist, um die auf das Vorderrad (3) wirkenden Stoß- und Bremsbelastungen über die Führungsschwinge (13) zu dämpfen.

2. Fahrzeug nach Anspruch 1, wobei
- die Vorderradaufhängung (10) eine in Längsrichtung (X) des Fahrzeugs erstreckte weitere Führungsschwinge (14) umfasst, die mit dem Querlenker (11) gelenkig verbunden und über den Querlenker (11) an der Stützstruktur (1) oder dem Motor (2) abgestützt ist,
- die Führungsschwingen (13, 14) gemeinsam das zwischen den Führungsschwingen (13, 14) um die Vorderradachse (Y₃) drehbar angeordnete Vorderrad (3) lagern
- und die Stoßdämpfungseinrichtung (30) auch mit der weiteren Führungsschwinge (14) in einem in Längsrichtung (X) zwischen dem Querlenker (11) und der Vorderradachse (Y₃) gelegenen Bereich der weiteren Führungsschwinge (14) gelenkig verbunden ist, um auf das Vorderrad (3) wirkende Stoß- und Bremsbelastungen über die Führungsschwingen (13, 14) zu dämpfen.

3. Fahrzeug nach wenigstens einem der vorhergehenden Ansprüche, wobei die Führungsschwinge (13) oder die Führungsschwingen (13, 14) des Anspruchs 2 um eine zur Vorderradachse (Y₃) zumindest im Wesentlichen parallele Aufhängungs-Schwenkachse (Y₁) relativ zu der Stützstruktur (1) oder dem Motor (2), jeweils mittels eines Gelenks (15/16) mit dem Querlenker (11) verbunden und im jeweiligen Gelenk (15/16) in der Draufsicht auf das Fahrzeug gesehen relativ zum Querlenker (11) schwenkbeweglich oder schwenkbar ist oder sind, wobei das jeweilige Gelenk vorzugsweise ein Drehgelenk (15/16) ist.

4. Fahrzeug nach wenigstens einem der vorhergehenden Ansprüche, wobei die Führungsschwinge (13) oder die Führungsschwingen (13, 14) des Anspruchs 2 jeweils mittels eines Vorderrad-Schwenkgelenks (17/18) mit einem um die Vorderradachse (Y₃) drehbaren Wellenelement oder vorzugsweise einem das Vorderrad (3) drehbar lagernden Achselement (7) verbunden ist oder sind und das Vorderrad (3) in der Draufsicht auf das Fahrzeug gesehen relativ zu der oder den Führungsschwingen (13, 14) schwenkbeweglich ist, wobei das jeweilige Vorderrad-Schwenkgelenk (17/18) vorzugsweise ein Drehgelenk ist.

5. Fahrzeug nach wenigstens einem der vorhergehenden Ansprüche und wenigsten einem der folgenden Merkmale:
a) wobei eine obere Abstützung (28) der Stoßdämpfungseinrichtung (30) im Ruhezustand des Fahrzeugs auf oder unter der Höhe des oberen Rands des Vorderrads (3) gelegen ist;
b) wobei die Stoßdämpfungseinrichtung (30) mittels eines Gelenks unmittelbar an der Stützstruktur (1) oder dem Motor (2) abgestützt ist;
c) wobei sich die Stoßdämpfungseinrichtung (30) zwischen einer oberen Abstützung (28) an der Stützstruktur (1) oder dem Motor (2) und einer unteren Abstützung (29) erstreckt und über die untere Abstützung auf die Führungsschwinge (13) oder Führungsschwingen (13, 14) des Anspruchs 2 wirkt;
d) wobei sich die Stoßdämpfungseinrichtung (30) zwischen einer in Bezug auf die Längsrichtung (X) hinteren Abstützung (28) an der Stützstruktur (1) oder dem Motor (2) und einer vorderen Abstützung (29) erstreckt und über die vordere Abstützung (29) auf die Führungsschwinge (13) oder Führungsschwingen (13, 14) des Anspruchs 2 wirkt.

6. Fahrzeug nach wenigstens einem der vorhergehenden Ansprüche, wobei die Führungsschwinge (13) oder die Führungsschwingen (13, 14) nach Anspruch 2 mit der oder den Führungsschwinge(n) das Vorderrad (3) über den Querlenker (11) in Längsrichtung (X) an der Stützstruktur (1) oder dem Motor (2) und/oder über den Querlenker (11) in eine zur Vorderradachse (Y₃) zumindest im Wesentlichen parallele Querrichtung (Y) und/oder in eine zur Längsrichtung (X) und der Vorderradachse (Y₃) orthogonale Hochrichtung (Z) abgestützt ist oder sind.

7. Fahrzeug nach wenigstens einem der vorhergehenden Ansprüche, wobei der Querlenker (11) relativ zu der Stützstruktur (1) oder dem Motor (2) in Bezug auf wenigstens eine Raumachse (X) eines stützstruktur- oder motorfesten kartesischen Koordinatensystems, vorzugsweise in Bezug auf jede der drei Raumachsen (X, Y, Z) des Koordinatensystems, abgesehen von Spiel, translatorisch unbeweglich ist.

8. Fahrzeug nach wenigstens einem der vorhergehenden Ansprüche in Kombination mit Anspruch 2, wobei der Querlenker (11), die Führungsschwingen (13, 14) und die Vorderradachse (Y₃) in der Draufsicht auf das Fahrzeug ein Mehrgelenk-Polygon, vorzugsweise Mehrgelenk-Parallelogramm, bilden, das an der Stützstruktur (1) oder dem Motor (2) um eine horizontale Querachse (Y₁) schwenkbeweglich abgestützt ist.

9. Fahrzeug nach wenigstens einem der vorhergehenden Ansprüche, wobei die Führungsschwinge (13) oder die Führungsschwingen (13, 14) nach Anspruch 2 jeweils in einem vorderen Schwingenbereich mittels eines Vorderrad-Schwenkgelenks (17/18), vorzugsweise Drehgelenks (17/18), mit einem Wellenelement oder vorzugsweise einem das Vorderrad (3) um die Vorderradachse (Y₃) drehbar lagernden Achselement (7) verbunden ist oder sind und vorzugsweise eine Gelenkachse (Z₃) des Vorderrad-Schwenkgelenks (17/18) die Vorderradachse (Y₃) kreuzt oder schneidet, wobei die Vorderrad-Schwenkgelenks (17/18) vorzugsweise orthogonal zur Vorderradachse (Y₃) weist.

10. Fahrzeug nach wenigstens einem der vorhergehenden Ansprüche, wobei der Querlenker (11) mittels eines ersten Drehgelenks (1/12) in der Draufsicht auf das Fahrzeug gesehen schwenkbar gelagert ist und die Führungsschwinge (13) oder die Führungsschwingen (13, 14) nach Anspruch 2 mittels eines zweiten Drehgelenks (11//15) um eine zur Vorderradachse (Y₃) zumindest im Wesentlichen parallele Aufhängungs-Schwenkachse (Y₁) schwenkbar gelagert ist oder sind, wobei das erste Drehgelenk (1/12) mit dem oder den zweiten Drehgelenken (11/15) vorzugsweise ein Kreuzgelenk (12) bildet.

11. Fahrzeug nach wenigstens einem der vorhergehenden Ansprüche, wobei der Querlenker (11) mittels eines Drehgelenks (1, 12) an der Stützstruktur (1) oder dem Motor (2) abgestützt ist, vorzugsweise unmittelbar an der Stützstruktur (1) oder dem Motor (2) abgestützt ist und/oder der Querlenker (11) in der Draufsicht auf das Fahrzeug gesehen relativ zu der Stützstruktur (1) oder dem Motor (2) um die Gelenkachse (Z₁) eines als Drehgelenk gebildeten Querlenker-Schwenkgelenks (1, 12) schwenkbar ist.

12. Fahrzeug nach wenigstens einem der vorhergehenden Ansprüche und einem der folgenden Merkmale:
a) wobei die Führungsschwinge (13) oder die Führungsschwingen (13, 14) nach Anspruch 2 jeweils mittels eines Drehgelenks (15, 16), vorzugsweise nur mittels des jeweiligen Drehgelenks (15, 16), in der Draufsicht auf das Fahrzeug gesehen um die Gelenkachse (Z₂) des jeweiligen Drehgelenks (15, 16) mit dem Querlenker (11) schwenkbeweglich verbunden ist oder sind;
b) wobei die Führungsschwinge (13) oder die Führungsschwingen (13, 14) nach Anspruch 2 jeweils das Vorderrad (3) mittels eines Drehgelenks (17, 18) um eine zur Vorderradachse (Y₃) nicht parallele, vorzugsweise orthogonale und noch bevorzugter radiale Schwenkachse (Z₃) schwenkbeweglich lagert;
c) wobei die Führungsschwinge (13) oder die Führungsschwingen (13, 14) nach Anspruch 2 jeweils mit dem Vorderrad (3) nur mittels eines oder mehrerer Drehgelenke rotatorisch beweglich verbunden ist oder sind.

13. Fahrzeug nach wenigstens einem der vorhergehenden Ansprüche, wobei die Vorderradaufhängung (10) ferner einen Anlenkhebel (25) mit einem ersten Hebelarm und zweiten Hebelarm umfasst, die Stoßdämpfungseinrichtung (30) am ersten Hebelarm abgestützt und der zweite Hebelarm mittels Gelenkverbindung (20, 21, 22, 23, 25 26) in Bezug auf eine oder mehrere Achsen (Y₂, Y₅, Z₄, Z₅) gelenkig mit der Führungsschwinge (13), vorzugsweise gelenkig mit den Führungsschwingen (13, 14) des Anspruchs 2 verbunden ist.

14. Fahrzeug nach dem vorhergehenden Anspruch und wenigstens einem der folgenden Merkmale:
a) wobei der Anlenkhebel (25) relativ zu der Stützstruktur (1) oder dem Motor (2) in Bezug auf wenigstens eine Raumachse (X) eines stützstruktur- oder motorfesten kartesischen Koordinatensystems, vorzugsweise in Bezug auf jede der drei Raumachsen (X, Y, Z) des Koordinatensystems, translatorisch unbeweglich ist;
b) wobei der Anlenkhebel (25) um eine Hebelschwenkachse (Y₄) relativ zu der Stützstruktur (1) oder dem Motor (2) schwenkbar ist und die Hebelschwenkachse (Y₄) zur Vorderradachse (Y₃) vorzugsweise zumindest im Wesentlichen parallel ist, wenn die Vorderradachse (Y₃) für Geradeausfahrt ausgerichtet ist;
c) wobei der Anlenkhebel (25) um eine Hebelschwenkachse (Y₄) schwenkbar an der Stützstruktur (1) oder dem Motor (2) abgestützt ist und einer der Hebelarme von der Hebelschwenkachse (Y₄) aus in die gleiche Richtung (X) über den anderen vorragt;
d) wobei der Anlenkhebel (25) mittels eines Drehgelenks (1, 25) um eine die Gelenkachse des Drehgelenks bildende Hebelschwenkachse (Y₄) schwenkbar an der Stützstruktur (1) oder Motor (2), vorzugsweise unmittelbar an der Stützstruktur (1) oder dem Motor (2) abgestützt ist;
e) wobei die Vorderradaufhängung (10) einen weiteren Querlenker (20) umfasst und der weitere Querlenker (20) in der Gelenkverbindung (20, 21, 22, 23, 25, 26) von Führungsschwinge (13 oder 14) und Anlenkhebel (25) angeordnet ist;
f) wobei die Hebelarme in Längsrichtung (X) erstreckt sind;
g) wobei die Führungsschwinge (13) oder die Führungsschwingen (13, 14) des Anspruchs 2 nur mittels Drehgelenken (21, 22; 20, 21; 20, 23; 23, 26; 25, 26) rotatorisch beweglich mit dem Anlenkhebel (25) verbunden ist oder sind;
h) wobei die Führungsschwinge (13) oder die Führungsschwingen (13, 14) des Anspruchs 2, der Anlenkhebel (25), ein Abschnitt der Stützstruktur (1) oder des Motors (2) und ein gelenkig mit der jeweiligen Führungsschwinge (13 und/oder 14) und gelenkig mit dem Anlenkhebel (25) verbundener weiterer Querlenker (26) in einer Seitenansicht des Fahrzeugs ein Mehrgelenk-Polygon, Mehrgelenk-Parallelogramm, vorzugsweise bilden.

15. Fahrzeug nach wenigstens einem der vorhergehenden Ansprüche, wobei der Fahrzeuglenker (6) um eine Lenkachse (Z₆) relativ zu der Stützstruktur (1) oder dem Motor (2) schwenkbar und zur Übertragung von Lenkbewegungen mittels einer Lenkstange (8) mit dem Querlenker (11) gekoppelt ist und die Lenkstange (8) mittels eines ersten Gelenks mit dem Fahrzeuglenker (6) verbunden ist.

16. Fahrzeug nach dem vorhergehenden Anspruch und wenigstens einem der folgenden Merkmale:
a) wobei das erste Gelenk, das die Lenkstange (8) mit dem Fahrzeuglenker (6) verbindet, am Fahrzeuglenker (6) so angeordnet ist, das eine Gelenkachse (Z₇) dieses Gelenks von der Lenkradachse (6) einen ersten Abstand aufweist, wobei die Lenkstange (8) mittels eines zweiten Gelenks (9) mit dem Querlenker (11) verbunden ist und eine Gelenkachse des zweiten Gelenks (9) von einer Aufhängungs-Lenkachse (Z₁), um die der Querlenker (11) schwenkbeweglich ist, einen zweiten Abstand aufweist, und wobei der erste Abstand und der zweite Abstand gleichgroß sind;
b) wobei die Lenkstange (8) zur Übertragung der Lenkbewegungen des Fahrzeuglenkers (6) direkt oder über ein oder mehrere Zwischenglieder gelenkig mit dem Querlenker (11) verbunden ist.

17. Fahrzeug nach wenigstens einem der Ansprüche 1 bis 14 und wenigstens einem der folgenden Merkmale:
a) ferner umfassend eine Lenkeinrichtung, beispielsweise eine elektrische oder elektrohydraulische Lenkeinrichtung, die zum Schwenken des Querlenkers (11) um eine Aufhängungs-Lenkachse (Z₁) mit dem Querlenker (11) mechanisch und mit dem Fahrzeuglenker (6) elektrisch oder hydraulisch gekoppelt ist, um Lenkbewegungen, die der Fahrzeuglenker (6) um eine Lenkachse (Z₆) relativ zu der Stützstruktur (1) oder dem Motor (2) ausführt, in Schwenkbewegungen des Querlenkers (11) um die Aufhängungs-Lenkachse (Z₁) umzuwandeln;
b) wobei die Lenkeinrichtung eine an der Stützstruktur (1) oder dem Motor (2) abgestützte und auf den Querlenker (11) wirkende Hydraulikeinheit, vorzugsweise Kolben-Zylinder-Einheit, und eine Pumpe zur hydraulischen Druckbeaufschlagung der Hydraulikeinheit aufweist;
c) wobei die Lenkeinrichtung ein hydraulisches Steuerorgan, vorzugsweise Steuerventil, das hydraulisch vorzugsweise zwischen der Pumpe und der Hydraulikeinheit angeordnet ist, ferner einen Sensor zur Ermittlung der Lenkposition des Fahrzeuglenkers und eine Steuereinrichtung aufweist, die aus Signalen des Sensors Steuersignale bildet und diese dem Steuerorgan aufgibt, um die Hydraulikeinheit in Abhängigkeit von den Lenkbewegungen des Fahrzeuglenkers (6) zu steuern.

18. Fahrzeug nach wenigstens einem der vorhergehenden Ansprüche, wobei die Vorderradaufhängung (10) die Position eines Bremsnickzentrums (Y₁) in Längs- und Hochrichtung (X, Z) des Fahrzeugs so bestimmt, dass für das Fahrzeug ein Anti-dive 60-100 %, vorzugsweise Anti-dive 70-90 % erhalten wird.

## Claims

1. A two-wheeled or three-wheeled vehicle comprising a supporting structure (1), an engine (2), handle bars (6), a rear wheel (4), a front wheel (3) and a front wheel suspension (10), the front wheel suspension (10) comprising:
(a) a transverse control arm (11) which can be pivoted relative to the supporting structure (1), as viewed in a plan view onto the vehicle, and which is coupled to the handle bars (6) in order to introduce steering movements of the handle bars (6) into the front wheel suspension (10);
(b) a guide link (13) which extends in the longitudinal direction (X) of the vehicle and is connected to the transverse control arm (11) via a joint and is supported on the supporting structure (1) or engine (2) via the transverse control arm (11) and mounts the front wheel (3) which can be rotated about a front wheel axis (Y₃); and
(c) a shock absorber (30) which is arranged behind the front wheel (3) at the height of the front wheel (3), **characterised in that** the shock absorber is connected to the guide link (13) via a joint in a region of the guide link (13) located between the transverse control arm (11) and the front wheel axis (Y₃) in the longitudinal direction (X), in order to absorb, via the guide link (13), the impact loads and brake loads acting on the front wheel (3).

2. The vehicle according to Claim 1, wherein:
- the front wheel suspension (10) comprises another guide link (14) which extends in the longitudinal direction (X) of the vehicle and is connected to the transverse control arm (11) via a joint and is supported on the supporting structure (1) or engine (2) via the transverse control arm (11);
- the guide links (13, 14) together mount the front wheel (3) which is arranged between the guide links (13, 14) such that it can be rotated about the front wheel axis (Y₃);
- and the shock absorber (30) is also connected to the other guide link (14) via a joint in a region of the other guide link (14) located between the transverse control arm (11) and the front wheel axis (Y₃) in the longitudinal direction (X), in order to absorb, via the guide links (13, 14), impact loads and brake loads acting on the front wheel (3).

3. The vehicle according to at least one of the preceding claims, wherein the guide link (13) or the guide links (13, 14) of Claim 2: can be pivoted relative to the supporting structure (1) or engine (2) about a suspension pivot axis (Y₁) which is at least substantially parallel to the front wheel axis (Y₃); is or are each connected to the transverse control arm (11) by means of a joint (15/16); and can be pivoted relative to the transverse control arm (11) in the respective joint (15/16) as viewed in the plan view onto the vehicle, wherein the respective joint is preferably a rotary joint (15/16).

4. The vehicle according to at least one of the preceding claims, wherein the guide link (13) or the guide links (13, 14) of Claim 2 is or are each connected, by means of a front wheel pivot joint (17/18), to a shaft element which can be rotated about the front wheel axis (Y₃) or preferably to an axle element (7) which rotatably mounts the front wheel (3), and the front wheel (3) can be pivoted relative to the guide link(s) (13, 14) as viewed in the plan view onto the vehicle, wherein the respective front wheel pivot joint (17/18) is preferably a rotary joint.

5. The vehicle according to at least one of the preceding claims and at least one of the following features:
a) an upper support (28) of the shock absorber (30) is located at or below the height of the upper edge of the front wheel (3) when the vehicle is at rest;
b) the shock absorber (30) is directly supported on the supporting structure (1) or engine (2) by means of a joint;
c) the shock absorber (30) extends between an upper support (28) on the supporting structure (1) or engine (2) and a lower support (29) and acts on the guide link (13) or guide links (13, 14) of Claim 2 via the lower support (29);
d) the shock absorber (30) extends between a support (28) on the supporting structure (1) or engine (2), which is a rear support (28) in relation to the longitudinal direction (X), and a front support (29) and acts on the guide link (13) or guide links (13, 14) of Claim 2 via the front support (29).

6. The vehicle according to at least one of the preceding claims, wherein the guide link (13) or guide links (13, 14) according to Claim 2, and with it/them the front wheel (3), is/are supported via the transverse control arm (11) in the longitudinal direction (X) on the supporting structure (1) or engine (2) and/or via the transverse control arm (11) in a transverse direction (Y) which is at least substantially parallel to the front wheel axis (Y₃) and/or in a vertical direction (Z) which is orthogonal with respect to the longitudinal direction (X) and the front wheel axis (Y₃).

7. The vehicle according to at least one of the preceding claims, wherein the transverse control arm (11) cannot be translationally moved, aside from clearance, relative to the supporting structure (1) or engine (2) in relation to at least one spatial axis (X) of a Cartesian co-ordinate system which is fixed relative to the supporting structure or engine and preferably in relation to each of the three spatial axes (X, Y, Z) of the co-ordinate system.

8. The vehicle according to at least one of the preceding claims in combination with Claim 2, wherein in the plan view onto the vehicle, the transverse control arm (11), the guide links (13, 14) and the front wheel axis (Y₃) form a polyarticulated polygon, preferably a polyarticulated parallelogram, which is supported on the supporting structure (1) or engine (2) such that it can be pivoted about a horizontal transverse axis (Y₁).

9. The vehicle according to at least one of the preceding claims, wherein the guide link (13) or guide links (13, 14) according to Claim 2 is/are each connected to a shaft element or preferably an axle element (7) which mounts the front wheel (3) such that it can be rotated about the front wheel axis (Y₃), in a front link region, by means of a front wheel pivot joint (17/18), preferably a rotary joint (17/18), and a joint axis (Z₃) of the front wheel pivot joint (17/18) preferably crosses or intersects the front wheel axis (Y₃), wherein the front wheel pivot joint (17/18) preferably points orthogonally with respect to the front wheel axis (Y₃).

10. The vehicle according to at least one of the preceding claims, wherein the transverse control arm (11) is mounted such that it can be pivoted by means of a first rotary joint (1/12) in the plan view onto the vehicle, and the guide link (13) or guide links (13, 14) according to Claim 2 is/are mounted such that it/they can be pivoted by means of a second rotary joint (11/15) about a suspension pivot axis (Y₁) which is at least substantially parallel to the front wheel axis (Y₃), wherein the first rotary joint (1/12) preferably forms a universal joint (12) with the second rotary joint(s) (11/15).

11. The vehicle according to at least one of the preceding claims, wherein the transverse control arm (11) is supported on the supporting structure (1) or engine (2) by means of a rotary joint (1/12), preferably directly supported on the supporting structure (1) or engine (2), and/or the transverse control arm (11) can be pivoted relative to the supporting structure (1) or engine (2), as viewed in the plan view onto the vehicle, about the joint axis (Z₁) of a transverse control arm pivot joint (1/12) which is formed as a rotary joint.

12. The vehicle according to at least one of the preceding claims and one of the following features:
a) the guide link (13) or guide links (13, 14) according to Claim 2 is or are each connected to the transverse control arm (11), by means of a rotary joint (15/16) and preferably by means of the respective rotary joint (15/16) only, such that it/they can be pivoted about the joint axis (Z₂) of the respective rotary joint (15/16) as viewed in the plan view onto the vehicle;
b) the guide link (13) or guide links (13, 14) according to Claim 2 mounts or each mount the front wheel (3), by means of a rotary joint (17/18), such that it can be pivoted about a pivot axis (Z₃) which is not parallel to the front wheel axis (Y₃) and is preferably orthogonal and even more preferably radial with respect to the front wheel axis (Y₃);
c) the guide link (13) or guide links (13, 14) according to Claim 2 is or are each connected to the front wheel (3), such that it/they can be rotated, by means of one or more rotary joints only.

13. The vehicle according to at least one of the preceding claims, wherein: the front wheel suspension (10) further comprises a link lever (25) comprising a first lever arm and a second lever arm; the shock absorber (30) is supported on the first lever arm; and the second lever arm is connected to the guide link (13) and preferably the guide links (13, 14) of Claim 2 via a joint by means of an articulated connection (20, 21, 22, 23, 25, 26) in relation to one or more axes (Y₂, Y₅, Z₄, Z₅).

14. The vehicle according to the preceding claim and at least one of the following features:
a) the link lever (25) cannot be translationally moved relative to the supporting structure (1) or engine (2) in relation to at least one spatial axis (X) of a Cartesian co-ordinate system which is fixed relative to the supporting structure or engine and preferably in relation to each of the three spatial axes (X, Y, Z) of the co-ordinate system;
b) the link lever (25) can be pivoted relative to the supporting structure (1) or engine (2) about a lever pivot axis (Y₄), and the lever pivot axis (Y₄) is preferably at least substantially parallel to the front wheel axis (Y₃) when the front wheel axis (Y₃) is orientated for driving straight ahead;
c) the link lever (25) is supported on the supporting structure (1) or engine (2), such that it can be pivoted about a lever pivot axis (Y₄), and one of the lever arms protrudes beyond the other, from the lever pivot axis (Y₄), in the same direction (X);
d) the link lever (25) is supported on the supporting structure (1) or engine (2), preferably directly supported on the supporting structure (1) or engine (2), such that it can be pivoted about a lever pivot axis (Y₄) which forms the joint axis of a rotary joint (1/25), by means of the rotary joint;
e) the front wheel suspension (10) comprises another transverse control arm (20), and the other transverse control arm (20) is arranged in the articulated connection (20, 21, 22, 23, 25, 26) between the guide link (13 or 14) and the link lever (25);
f) the lever arms extend in the longitudinal direction (X);
g) the guide link (13) or guide links (13, 14) of Claim 2 is/are connected to the link lever (25), such that it/they can be rotated, by means of rotary joints (21/22, 20/21, 20/23, 23/26, 25/26) only;
h) the guide link (13) or guide links (13, 14) of Claim 2, the link lever (25), a portion of the supporting structure (1) or engine (2), and another transverse control arm (26), which is connected via a joint to the respective guide link (13 and/or 14) and connected via a joint to the link lever (25), form a polyarticulated polygon, preferably a polyarticulated parallelogram, in a lateral view of the vehicle.

15. The vehicle according to at least one of the preceding claims, wherein the handle bars (6) can be pivoted relative to the supporting structure (1) or engine (2) about a steering axis (Z₆) and are coupled to the transverse control arm (11) by means of a steering column (8) in order to transmit steering movements, and the steering column (8) is connected to the handle bars (6) by means of a first joint.

16. The vehicle according to the preceding claim and at least one of the following features:
a) the first joint, which connects the steering column (8) to the handle bars (6), is arranged on the handle bars (6) such that a joint axis (Z₇) of this joint exhibits a first distance from the steering wheel axis (6), wherein the steering column (8) is connected to the transverse control arm (11) by means of a second joint (9), and a joint axis of the second joint (9) exhibits a second distance from a suspension steering axis (Z₁) about which the transverse control arm (11) can be pivoted, and wherein the first distance and the second distance are of equal size;
b) the steering column (8) is connected via a joint to the transverse control arm (11), directly or via one or more intermediate members, in order to transmit the steering movements of the handle bars (6).

17. The vehicle according to at least one of Claims 1 to 14 and at least one of the following features:
a) the vehicle further comprises a steering assembly, for example an electric or electrohydraulic steering assembly, which is mechanically coupled to the transverse control arm (11) and electrically or hydraulically coupled to the handle bars (6) in order to pivot the transverse control arm (11) about a suspension steering axis (Z₁), in order to convert steering movements, which the handle bars (6) perform relative to the supporting structure (1) or engine (2) about a steering axis (Z₆), into pivoting movements of the transverse control arm (11) about the suspension steering axis (Z₁);
b) the steering assembly comprises a hydraulic unit, preferably a piston-cylinder unit, which is supported on the supporting structure (1) or engine (2) and acts on the transverse control arm (11), and a pump for hydraulically applying pressure to the hydraulic unit;
c) the steering assembly comprises a hydraulic control unit, preferably a control valve, which hydraulically is preferably arranged between the pump and the hydraulic unit, and further comprises a sensor for ascertaining the steering position of the handle bars (6), and a controller which forms control signals from signals of the sensor and feeds them to the control unit in order to control the hydraulic unit in accordance with the steering movements of the handle bars (6).

18. The vehicle according to at least one of the preceding claims, wherein the front wheel suspension (10) determines the position of an anti-dive centre (Y₁) in the longitudinal and vertical direction (X, Z) of the vehicle such that an anti-dive of 60-100%, preferably 70-90%, is obtained for the vehicle.

## Revendications

1. Véhicule à deux ou trois roues ayant une structure de support (1), un moteur (2), un guidon de véhicule (6), une roue arrière (4), une roue avant (3) et une suspension de roue avant (10), la suspension de roue avant (10) comportant :
(a) un bras transversal (11) pouvant pivoter par rapport à la structure de support (1) lorsque le véhicule est vu de dessus, lequel bras transversal est couplé au guidon de véhicule (6) afin d'initier des mouvements de direction du guidon de véhicule (6) dans la suspension de roue avant (10),
(b) un bras oscillant de guidage (13) s'étendant dans une direction longitudinale (X) du véhicule, lequel bras oscillant de guidage est relié de manière articulée au bras transversal (11) et est supporté via le bras transversal (11) par la structure de support (1) ou le moteur (2) et supporte la roue avant (3) de façon à pouvoir tourner autour d'un axe de roue avant (Y₃),
(c) un dispositif d'absorption de choc (30) qui est agencé à la hauteur de la roue avant (3) derrière la roue avant (3), **caractérisé en ce que** le dispositif d'absorption de choc est relié de manière articulée au bras oscillant de guidage (13) dans une zone du bras oscillant de guidage (13) située dans la direction longitudinale (X) entre le bras transversal (11) et l'axe de roue avant (Y₃), afin d'absorber par le biais du bras oscillant de guidage (13) des charges d'impact et de freinage agissant sur la roue avant (3).

2. Véhicule selon la revendication 1, dans lequel :
- la suspension de roue avant (10) comporte un bras oscillant de guidage supplémentaire (14) s'étendant dans la direction longitudinale (X) du véhicule, lequel bras oscillant de guidage étant relié de manière articulée au bras transversal (11) et supporté par le biais du bras transversal (11) par la structure de support (1) ou le moteur (2),
- les bras oscillants de guidage (13, 14) supportent conjointement la roue avant (3) agencée entre les bras oscillants de guidage (13, 14) de façon à pouvoir tourner autour de l'axe de roue avant (Y₃),
- et le dispositif d'absorption de choc (30) est également relié de manière articulée au bras oscillant de guidage supplémentaire (14) dans une zone du bras oscillant de guidage supplémentaire (14) située dans la direction longitudinale (X) entre le bras transversal (11) et l'axe de roue avant (Y₃), afin d'absorber par le biais des bras oscillants de guidage (13, 14) des charges d'impact et de freinage agissant sur la roue avant (3).

3. Véhicule selon au moins une des revendications précédentes, dans lequel le bras oscillant de guidage (13) ou les bras oscillants de guidage (13, 14) selon la revendication 2 est ou sont reliés au bras transversal (11) autour d'un axe de suspension-pivotement (Y₁) au moins sensiblement parallèle à l'axe de roue avant (Y₃) par rapport à la structure de support (1) ou au moteur (2), respectivement au moyen d'une articulation (15/16), et peut ou peuvent avoir un mouvement de pivotement ou peut ou peuvent pivoter dans chaque articulation (15/16) par rapport au bras transversal (11) lorsque le véhicule est vu de dessus, l'articulation respective étant de préférence une articulation tournante (15/16).

4. Véhicule selon au moins une des revendications précédentes, dans lequel le bras oscillant de guidage (13) ou les bras oscillants de guidage (13, 14) selon la revendication 2 est ou sont respectivement reliés au moyen d'une articulation pivotante de roue avant (17/18) à un élément d'arbre pouvant tourner autour de l'axe de roue avant (Y₃) ou de préférence à un élément d'essieu (7) monté de façon à pouvoir faire tourner la roue avant (3), et la roue avant (3) a un mouvement de pivotement par rapport au ou aux bras oscillants de guidage (13, 14) lorsque le véhicule est vu de dessus, l'articulation pivotante de roue avant (17/18) respective étant de préférence une articulation tournante.

5. Véhicule selon au moins une des revendications précédentes et présentant au moins une des caractéristiques suivantes :
a) dans lequel un support supérieur (28) du dispositif d'absorption de choc (30) est monté à la hauteur ou en dessous du bord supérieur de la roue avant (3) lorsque le véhicule est à l'arrêt,
b) dans lequel le dispositif d'absorption de choc (30) est directement supporté par la structure de support (1) ou le moteur (2) au moyen d'une articulation,
c) dans lequel le dispositif d'absorption de choc (30) s'étend entre un support supérieur (28) sur la structure de support (1) ou le moteur (2) et un support inférieur (29) et agit par l'intermédiaire du support inférieur sur le bras oscillant de guidage (13) ou les bras oscillants de guidage (13, 14) selon la revendication 2,
d) dans lequel le dispositif d'absorption de choc (30) s'étend entre un support arrière (28) par rapport à la direction longitudinale (X) sur la structure de support (1) ou le moteur (2) et un support avant (29), et agit par l'intermédiaire du support avant (29) sur le bras oscillant de guidage (13) ou sur les bras oscillants de guidage (13, 14) de la revendication 2.

6. Véhicule selon au moins une des revendications précédentes, dans lequel le bras oscillant de guidage (13) ou les bras oscillants de guidage (13, 14) selon la revendication 2 est ou sont supportés avec le ou les bras oscillants de guidage de la roue avant (3) par l'intermédiaire du bras transversal (11) dans la direction longitudinale (X) par la structure de support (1) ou le moteur (2) et/ou par l'intermédiaire du bras transversal (11) dans une direction transversale (Y) au moins sensiblement parallèle à l'axe de roue avant (Y₃) et/ou dans une direction de hauteur (Z) orthogonale à la direction longitudinale (X) et à l'axe de roue avant (Y₃).

7. Véhicule selon au moins une des revendications précédentes, dans lequel, hormis un jeu, le bras transversal (11) par rapport à la structure de support (1) ou au moteur (2) est immobile en translation par rapport à au moins un axe spatial (X) d'un système de coordonnées cartésiennes fixe par rapport à la structure de support ou au moteur, de préférence par rapport à chacun des trois axes spatiaux (X, Y, Z) du système de coordonnées.

8. Véhicule selon au moins une des revendications précédentes en combinaison avec la revendication 2, dans lequel le bras transversal (11), les bras oscillants de guidage (13, 14) et l'axe de roue avant (Y₃) forment, lorsque le véhicule est vu de dessus, un polygone à plusieurs articulations, de préférence un parallélogramme à plusieurs articulations, qui est supporté par la structure de support (1) ou le moteur (2) de manière à avoir un mouvement de pivotement autour d'un axe transversal horizontal (Y₁).

9. Véhicule selon au moins une des revendications précédentes, dans lequel le bras oscillant de guidage (13) ou les bras oscillants de guidage (13, 14) selon la revendication 2 est ou sont respectivement reliés dans une zone d'oscillation avant, au moyen d'une articulation tournante de roue avant (17/18), de préférence une articulation tournante (17/18), à un élément d'arbre ou de préférence à un élément d'essieu (7) monté de manière à pouvoir faire tourner la roue avant (3) autour de l'axe de roue avant (Y₃), et de préférence un axe d'articulation (Z₃) de l'articulation pivotante de roue avant (17/18) croise ou coupe l'axe de roue avant (Y₃), dans lequel l'articulation pivotante de roue avant (17/18) est de préférence orthogonale à l'axe de roue avant (Y₃) .

10. Véhicule selon au moins une des revendications précédentes, dans lequel le bras transversal (11) est monté de manière à pouvoir pivoter au moyen d'une première articulation tournante (1/12) lorsque le véhicule est vu de dessus, et le bras oscillant de guidage (13) ou les bras oscillants de guidage (13, 14) selon la revendication 2 est ou sont montés de façon à pouvoir pivoter au moyen d'une seconde articulation tournante (11/15) autour d'un axe de suspension-pivotement (Y₁) au moins sensiblement parallèle à l'axe de roue avant (Y₃), la première articulation tournante (1/12) formant de préférence une articulation à croisillon (12) avec le ou les articulations tournantes (11/15).

11. Véhicule selon au moins une des revendications précédentes, dans lequel le bras transversal (11) est supporté au moyen d'une articulation tournante (1, 12) par la structure de support (1) ou le moteur (2), est de préférence directement supporté par la structure de support (1) ou le moteur (2) et/ou le bras transversal (11) peut pivoter, lorsque le véhicule est vu de dessus, par rapport à la structure de support (1) ou au moteur (2) autour de l'axe d'articulation (Z₁) d'une articulation pivotante de bras transversal (1, 12) formée comme une articulation tournante (1, 12).

12. Véhicule selon au moins une des revendications précédentes et présentant l'une des caractéristiques suivantes :
a) dans lequel le bras oscillant de guidage (13) ou les bras oscillants de guidage (13, 14) selon la revendication 2 est ou sont reliés au bras transversal (11) de manière à avoir un mouvement de pivotement autour de l'axe d'articulation (Z₂) de l'articulation tournante (15, 16) respective, respectivement au moyen d'une articulation tournante (15, 16), de préférence uniquement au moyen de l'articulation tournante (15, 16) respective, lorsque le véhicule est vu de dessus,
b) dans lequel le bras oscillant de guidage (13) ou les bras oscillants de guidage (13, 14) selon la revendication 2 supportent la roue avant (3) respectivement au moyen d'une articulation tournante (17, 18), de façon à avoir un mouvement de pivotement autour d'un axe de pivotement (Z₃) non parallèle à l'axe de roue avant (Y₃), de préférence radial et de manière encore plus préférée orthogonal,
c) dans lequel le bras oscillant de guidage (13) ou les bras oscillants de guidage (13, 14) selon la revendication 2 est ou sont respectivement reliés à la roue avant (3) de manière à avoir un mouvement de rotation uniquement au moyen d'une ou plusieurs articulations tournantes.

13. Véhicule selon au moins une des revendications précédentes, dans lequel la suspension de roue avant (10) comporte en outre un levier articulé (25) avec un premier bras de levier et un second bras de levier, le dispositif d'absorption de choc (30) est supporté par le premier bras de levier et le second bras de levier est relié de manière articulée au bras oscillant de guidage (13), de préférence de manière articulée aux bras oscillants de guidage (13, 14) selon la revendication 2, au moyen de liaisons articulées (20, 21, 22, 23, 25, 26) par rapport à un ou plusieurs axes (Y₂, Y₅, Z₄, Z₅) .

14. Véhicule selon la revendication précédente et présentant au moins une des caractéristiques suivantes :
a) dans lequel le levier articulé (25) par rapport à la structure de support (1) ou au moteur (2) est immobile en translation par rapport à au moins un axe spatial (X) d'un système de coordonnées cartésiennes fixe par rapport à la structure de support ou au moteur, de préférence par rapport à chacun des trois axes spatiaux (X, Y, Z) du système de coordonnées,
b) dans lequel le levier articulé (25) peut pivoter autour d'un axe de pivotement de levier (Y₄) par rapport à la structure de support (1) ou au moteur (2) et l'axe de pivotement de levier (Y₄) est de préférence au moins sensiblement parallèle à l'axe de roue avant (Y₃) lorsque l'axe de roue avant (Y₃) est aligné pour un déplacement en ligne droite,
c) dans lequel le levier articulé (25) peut pivoter autour d'un axe de pivotement de levier (Y₄) sur la structure de support (1) ou le moteur (2) et l'un des bras de levier fait saillie au-dessus de l'autre à partir de l'axe de pivotement de levier (Y₄) dans la même direction (X),
d) dans lequel le levier articulé (25) est supporté par la structure de support (1) ou le moteur (2), de préférence directement par la structure de support (1) ou le moteur (2), de manière à pouvoir pivoter autour d'un axe de pivotement de levier (Y₄) formant l'axe d'articulation de l'articulation tournante,
e) dans lequel la suspension de roue avant (10) comporte un bras transversal supplémentaire (20) et le bras transversal supplémentaire (20) dans la liaison articulée (20, 21, 22, 23, 25, 26) est agencé à partir du bras oscillant de guidage (13 ou 14) et du levier articulé (25),
f) dans lequel les bras de levier s'étendent dans la direction longitudinale (X),
g) dans lequel le bras oscillant de guidage (13) ou les bras oscillants de guidage (13, 14) de la revendication 2 est ou sont reliés au levier articulé (25) de façon à avoir un mouvement de rotation uniquement au moyen d'articulations tournantes (21, 22 ; 20, 21 ; 20, 23 ; 23, 26 ; 25, 26),
h) dans lequel le bras oscillant de guidage (13) ou les bras oscillants de guidage (13, 14) de la revendication 2, le levier articulé (25), une partie de la structure de support (1) ou du moteur (2) et un bras transversal supplémentaire (26) relié de manière articulée au bras oscillant de guidage (13 et/ou 14) respectif et de manière articulée au levier articulé (25) lorsque le véhicule est vu de côté, forment un polygone à plusieurs articulations, de préférence un parallélogramme à plusieurs articulations.

15. Véhicule selon au moins une des revendications précédentes, dans lequel le guidon de véhicule (6) est couplé au bras transversal (11) de manière à pouvoir pivoter par rapport à la structure de support (1) ou au moteur (2) autour d'un axe de direction (Z₆) et pour transmettre des mouvements de direction au moyen d'une bielle de direction (8), et la bielle de direction (8) est reliée au guidon de véhicule (6) au moyen d'une première articulation.

16. Véhicule selon la revendication précédente et présentant au moins une des caractéristiques suivantes :
a) dans lequel la première articulation reliant la bielle de direction (8) au guidon de véhicule (6) est agencée sur le guidon de véhicule (6) de sorte qu'un axe d'articulation (Z₇) de cette articulation a une première distance par rapport à l'axe de roue directrice (6), la bielle de direction (8) étant reliée au bras transversal (11) au moyen d'une seconde articulation (9), et un axe d'articulation de la seconde articulation (9) a une seconde distance par rapport à un axe de suspension-direction (Z₁) autour duquel le bras transversal (11) a un mouvement de pivotement, et dans lequel la première distance et la seconde distance sont identiques,
b) dans lequel la bielle de direction (8) est reliée de manière articulée au bras transversal (11) pour transmettre directement les mouvements de direction du guidon de véhicule (6), ou par le biais d'un ou plusieurs éléments intermédiaires.

17. Véhicule selon au moins une des revendications 1 à 14 et présentant au moins une des caractéristiques suivantes :
a) comportant en outre un dispositif de direction, par exemple un dispositif de direction électrique ou électrohydraulique, qui est couplé mécaniquement au bras transversal (11) pour faire pivoter le bras transversal (11) autour d'un axe de suspension-direction (Z₁) et qui est couplé électriquement ou hydrauliquement au guidon de véhicule (6), afin de convertir des mouvements de direction que le guidon de véhicule (6) effectue autour d'un axe de direction (Z₆) par rapport à la structure de support (1) ou au moteur (2), en mouvements de pivotement du bras transversal (11) autour de l'axe de suspension-direction (Z₁),
b) dans lequel le dispositif de direction comporte une unité hydraulique agissant sur la structure de support (1) ou le moteur (2) et sur le bras transversal (11), de préférence un bloc cylindre-piston, et une pompe pour appliquer une pression hydraulique à l'unité hydraulique,
c) dans lequel le dispositif de direction comporte un organe de commande hydraulique, de préférence une soupape de commande, qui est de préférence agencé hydrauliquement entre la pompe et l'unité hydraulique, ainsi qu'un capteur pour déterminer la position de direction du guidon de véhicule et un dispositif de commande qui forme des signaux de commande à partir des signaux provenant du capteur et transmet ceux-ci à l'organe de commande afin de commander l'unité hydraulique en fonction des mouvements de direction du guidon de véhicule (6).

18. Véhicule selon au moins une des revendications précédentes, dans lequel la suspension de roue avant (10) détermine la position d'un centre de plongée au freinage (Y₁) dans une direction de longueur et de hauteur (X, Z) du véhicule, de sorte qu'un effet anti-plongée de 60 à 100 %, de préférence un effet anti-plongée de 70 à 90 %, est obtenu pour le véhicule.
